(19) Europäisches Patentamt
European Patent Office
Office européen des brevets

(11) **EP 3 195 264 B1**

(12) **EUROPÄISCHE PATENTSCHRIFT**

(45) Veröffentlichungstag und Bekanntmachung des Hinweises auf die Patenterteilung:
27.05.2020 Patentblatt 2020/22

(21) Anmeldenummer: **15767107.4**

(22) Anmeldetag: **08.09.2015**

(51) Int Cl.:
*G06T 15/00* (2011.01)    *G01N 21/47* (2006.01)
*G01N 21/17* (2006.01)    *G06T 7/33* (2017.01)
*G06T 7/593* (2017.01)    *G06T 11/00* (2006.01)

(86) Internationale Anmeldenummer:
**PCT/EP2015/070460**

(87) Internationale Veröffentlichungsnummer:
**WO 2016/041813 (24.03.2016 Gazette 2016/12)**

(54) **VORRICHTUNG UND VERFAHREN ZUR DREIDIMENSIONALEN ABBILDUNG EINES OBJEKTS**

DEVICE AND METHOD FOR PRODUCING A THREE-DIMENSIONAL IMAGE OF AN OBJECT

DISPOSITIF ET PROCÉDÉ DE REPRÉSENTATION TRIDIMENSIONNELLE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2014 DE 102014113433**

(43) Veröffentlichungstag der Anmeldung:
**26.07.2017 Patentblatt 2017/30**

(73) Patentinhaber: **Carl Zeiss Microscopy GmbH**
**07745 Jena (DE)**

(72) Erfinder:
• **STOPPE, Lars**
**07743 Jena (DE)**
• **HUSEMANN, Christoph**
**07749 Jena (DE)**

(74) Vertreter: **Sticht, Andreas**
**Kraus & Weisert**
**Patentanwälte PartGmbB**
**Thomas-Wimmer-Ring 15**
**80539 München (DE)**

(56) Entgegenhaltungen:
**US-A1- 2007 258 122    US-A1- 2013 280 752**

• **Anonymous: "Photometric stereo", Wikipedia, the free encyclopedia, 1. September 2014 (2014-09-01), XP055226027, Gefunden im Internet: URL:https://en.wikipedia.org/w/index.php?title=Photometric_stereo&oldid=623747889 [gefunden am 2015-11-05]**
• **Anonymous: "Tomografie", Wikipedia, die freie Enzyklopädie, 30. März 2014 (2014-03-30), XP055226024, Gefunden im Internet: URL:https://de.wikipedia.org/w/index.php?title=Tomografie&oldid=129028833 [gefunden am 2015-11-05]**
• **JAEDUCK JANG ET AL: "Multi-view optical tomography using L1 data fidelity and sparsity constraint", PROCEEDINGS OF SPIE, Bd. 6861, 7. Februar 2008 (2008-02-07), Seiten 68610G-68610G-8, XP055225457, US ISSN: 0277-786X, DOI: 10.1117/12.762412 ISBN: 978-1-62841-839-2**
• **S. KAWATA ET AL: "Optical microscope tomography. I. Support constraint", JOURNAL OF THE OPTICAL SOCIETY OF AMERICA A, Bd. 4, Nr. 1, 1987, Seite 292, XP055226123, ISSN: 1084-7529, DOI: 10.1364/JOSAA.4.000292**

**Beschreibung**

GEBIET DER ERFINDUNG

Ausführungsbeispiele der Erfindung betreffen Vorrichtungen und Verfahren zur dreidimensionalen Abbildung eines Objekts. Ausführungsbeispiele betreffen insbesondere derartige Vorrichtungen und Verfahren, mit denen wenigstens eine Amplitudeninformation des Objekts aus mehreren Bildern dreidimensional rekonstruiert werden kann.

HINTERGRUND

In zahlreichen Anwendungen, wie beispielsweise der Mikroskopie biologischer oder nichtbiologischer Objekte, ist es wünschenswert, das Objekt dreidimensional zu rekonstruieren. Dies kann durch eine rechnerische Verarbeitung mehrer Bilder erreicht werden, die von dem Objekt erfasst werden. Eine dreidimensionale Abbildung, die wenigstens die Amplitudeninformation enthält und somit Information über die örtlich veränderliche optische Dichte des Objekts bereitstellt, kann zusätzliche Information über das Objekt bieten.

Verschiedene Techniken können verwendet werden, um eine dreidimensionale Abbildung des Objekts durch Verarbeitung mehrerer zweidimensionaler Bilder zu erzielen.

Bei Tomographie-Verfahren kann die Abbildungsvorrichtung mit ihrer Lichtquelle und ihrem Detektor in kontrollierter Weise relativ zu dem abzubildenden Objekt gedreht werden. Aus den mehreren Bildern kann ein dreidimensionales Bild erzeugt werden. Die Drehung von sowohl Lichtquelle als auch Detektor relativ zu dem Objekt kann jedoch beispielsweise in der Mikroskopie eine aufwändige Mechanik erfordern. Dies erschwert die technische Umsetzung und kann nicht immer realisiert werden. Eine Drehung des Objekts relativ zu Lichtquelle und Detektor kann bei berührungsempfindlichen Objekten nicht oder nur schwer realisierbar sein. Eine Drehung des Objekts in unterschiedliche Positionen kann auch die Fixierung des Objekts an einem Träger erfordern, die unerwünscht sein kann.

Techniken wie die 3D-Ptychographie können rechnerisch aufwändig sein. Dies kann beispielsweise dann unerwünscht sein, wenn die dreidimensionale Abbildung Zeitbedingungen unterliegt. Beispielsweise stellt die Implementierung einer echtzeitfähigen dreidimensionalen Abbildung von Objekten mit 3D-Ptychographie eine Herausforderung dar.

Die Druckschrift US2007/0258122 offenbart ein optisches Computertomographiemikroskop für die dreidimensionale Bildgebung. Das Mikroskop verfügt über einen optischen Scanner, um den Beleuchtungswinkel unter dem ein Lichtstrahl die Probe durchstrahlt, zu variieren. Die Rekonstruktion der dreidimensionalen Abbildung wird iterativ korrigiert.

ZUSAMMENFASSUNG

Es besteht ein Bedarf an verbesserten Techniken zur dreidimensionalen Abbildung eines Objekts. Es besteht insbesondere ein Bedarf an Vorrichtungen und Verfahren, die eine dreidimensionale Abbildung des Objekts erlauben, wobei die dreidimensionale Information aus mehreren zweidimensionalen Bildern in effizienter Weise ermittelt werden kann. Es besteht ein Bedarf an derartigen Vorrichtungen und Verfahren, die keine mechanische Bewegung eines Detektors um ein Objekt erfordern.

Nach Ausführungsbeispielen werden Vorrichtungen und Verfahren angegeben, bei denen ein Objekt unter einer Mehrzahl von Beleuchtungswinkeln beleuchtet und jeweils ein Bild aufgenommen wird. Das Bild kann jeweils ein Intensitätsbild sein. Die Mehrzahl von Bildern wird rechnerisch weiterverarbeitet. Bei der Verarbeitung wird das Objekt dreidimensional aus der Mehrzahl von Bildern rekonstruiert. Dabei kann die Information über den bei der Bildaufnahme jeweils verwendeten Beleuchtungswinkel verwendet werden.

Durch die für mehrere der Beleuchtungswinkel schräge Beleuchtung des Objekts wird dreidimensionale Information des Objekts in eine Verschiebung von Strukturen in der Mehrzahl von Bildern umgesetzt. Dies kann verwendet werden, um aus der Mehrzahl von Bilden und den zugeordneten Beleuchtungswinkeln das Objekt dreidimensional zu rekonstruieren. Dabei kann die Rekonstruktion des Objekts wenigstens die Rekonstruktion der Amplitudeninformation umfassen. Bei einigen Ausführungsbeispielen kann sowohl die Amplitudeninformation als auch die Phaseninformation rekonstruiert werden.

Die Mehrzahl erfasster Bilder kann mehr als zwei Bilder umfassen. Eine Anzahl von Bildern in der Mehrzahl von Bildern kann viel größer als zwei sein.

Die Position eines Detektors kann relativ zu dem Objekt unverändert bleiben, während die Mehrzahl von Bildern erfasst wird.

Verschiedene Techniken können verwendet werden, um die dreidimensionale Information zu rekonstruieren. Es kann eine Verarbeitung ähnlich zu herkömmlichen Tomographieverfahren verwendet werden, wobei wegen der stationären Kamera eine Verkippung der Kamera relativ zur Richtung eines Beleuchtungsstrahls kompensiert wird.

**EP 3 195 264 B1**

Alternativ oder zusätzlich können Projektionsverfahren eingesetzt werden. Diese können durch eine Abfolge von Vorwärts-Projektionen von einem Volumen des Objekts auf die Bildsensorebene und Rückwärts-Projektionen aus der Bildsensorebene in das Volumen des Objekts umfassen. Die dreidimensionale Information kann iterativ rekonstruiert werden.

Alternativ oder zusätzlich können Bilder eines Bilderstapels, die unterschiedlichen Schnittebenen durch das Objekt entsprechen, rechnerisch ermittelt werden. Dazu kann eine Verschiebung, die durch einen z-Defokus unterschiedlicher Schnittebenen auf den Bildsensor verursacht wird, rechnerisch invertiert werden. Die so modifizierten Bilder können aufsummiert oder auf andere Weise kombiniert werden, um eine Amplitudeninformation in drei Dimensionen zu erhalten. Alternativ kann basierend auf einer Strukturerkennung in der Mehrzahl von Bildern die beleuchtungswinkelabhängige Verschiebung einer Struktur zwischen wenigstens zwei Bildern erkannt und so auf deren z-Defokus, also auf die Position entlang der optischen Achse, geschlossen werden.

Die verschiedenen Techniken können kombiniert werden. So kann beispielsweise zunächst durch eine Strukturerkennung versucht werden, Strukturen, die in mehreren Bildern enthalten sind, eine Position entlang der optischen Achse zuzuordnen. Diese Zuordnung kann abhängig von der beleuchtungswinkelabhängigen Verschiebung zwischen unterschiedlichen Bildern erfolgen. Die auf diese Weise bestimmte dreidimensionale Amplitudeninformation kann als Eingangsgröße für weitere Techniken verwendet werden, beispielsweise iterative Techniken oder tomographische Techniken.

Bei den Vorrichtungen und Verfahren nach Ausführungsbeispielen kann die Ermittlung der dreidimensionalen Information des Objekts in rechnerisch effizienter Weise ausgeführt werden. Durch die Beleuchtung unter einer Mehrzahl von Beleuchtungswinkeln und Berücksichtigung der Beleuchtungswinkel bei der rechnerischen Verarbeitung der Bilder können die Probleme verringert werden, die bei herkömmlichen Tomographieverfahren mit der Bewegung des Detektors und der Lichtquelle verbunden sind. Die rechnerische Kombination der Mehrzahl von Bildern kann durch Operationen realisiert werden, die rechnerisch effizient ausführbar sind und eine Echtzeitbedingung erfüllen können.

Eine Vorrichtung zur dreidimensionalen Abbildung eines Objekts nach einem Ausführungsbeispiel umfasst eine Beleuchtungseinrichtung, die steuerbar ist, um eine Mehrzahl von Beleuchtungswinkeln für eine Beleuchtung des Objekts einzustellen. Die Vorrichtung umfasst einen Detektor mit einem Bildsensor, der eingerichtet ist, um eine Mehrzahl von Bildern eines Objekts für die Mehrzahl von Beleuchtungswinkeln zu erfassen. Die Vorrichtung umfasst eine elektronische Verarbeitungseinrichtung zur Verarbeitung der Mehrzahl von Bildern, die mit dem Bildsensor gekoppelt ist. Die elektronische Verarbeitungseinrichtung kann eingerichtet sein, um abhängig von der Mehrzahl von Bildern eine dreidimensionale Amplitudeninformation des Objekts zu rekonstruieren.

Die Vorrichtung kann derart eingerichtet sein, dass eine Position des Detektors relativ zu dem Objekt bei der Aufnahme der Mehrzahl von Bildern unverändert ist.

Jedes Bild der Mehrzahl von Bildern kann ein Intensitätsbild sein.

Die elektronische Verarbeitungseinrichtung kann eingerichtet sein, um die dreidimensionale Amplitudeninformation abhängig davon zu rekonstruieren, in welche Pixel des Bildsensors ein Volumenelement des Objekts für die Mehrzahl von Beleuchtungswinkel jeweils abgebildet wird.

Die elektronische Verarbeitungseinrichtung kann eingerichtet sein, um abhängig von einem Abstand des Volumenelements von einer Fokusebene des Detektors zu ermitteln, in welche Pixel des Bildsensors das Volumenelement des Objekts für die Mehrzahl von Beleuchtungswinkel jeweils abgebildet wird. Auf diese Weise kann die Verschiebung, in die ein Abstand von der Fokusebene bei schräger Beleuchtung umgesetzt wird, gezielt zur dreidimensionalen Rekonstruktion verwendet werden.

Die elektronische Verarbeitungseinrichtung kann eingerichtet sein, um die Amplitudeninformation mehrerer Volumenelemente des Objekts, die in mehreren unterschiedlichen Ebenen angeordnet sind, abhängig von Intensitäten zu rekonstruieren, die der Bildsensor an einem Pixel für die unterschiedlichen Beleuchtungswinkel erfasst. Dadurch kann berücksichtigt werden, welche Volumenelemente des Objekts Strahlung auf dem Weg von der Beleuchtungseinrichtung zum Detektor in unterschiedlichen Schnittebenen des Objekts jeweils durchläuft.

Die elektronische Verarbeitungseinrichtung kann eingerichtet sein, um für jeden Beleuchtungswinkel der Mehrzahl von Beleuchtungswinkeln eine dem Beleuchtungswinkel zugeordnete Transformation auf ein Bild anzuwenden, das für den entsprechenden Beleuchtungswinkel erfasst wurde. Die Transformation kann einer virtuellen Verkippung des Detektors relativ zu dem Objekt entsprechen. Dies erlaubt es zu kompensieren, dass der Detektor abhängig vom Beleuchtungswinkel relativ zu einem Beleuchtungsstrahl verkippt sein kann.

Die elektronische Verarbeitungseinrichtung kann eingerichtet sein, um wenigstens auf einen Teil der Mehrzahl von Bildern die dem jeweiligen Beleuchtungswinkel zugeordnete Transformation anzuwenden, um eine Mehrzahl modifizierter Bilder zu erzeugen. Die elektronische Verarbeitungseinrichtung kann eingerichtet sein, um aus der Mehrzahl von modifizierten Bildern die dreidimensionale Amplitudeninformation zu rekonstruieren.

Die elektronische Verarbeitungseinrichtung kann eingerichtet sein, um die dreidimensionale Amplitudeninformation durch Vorwärts-Propagation vom Objekt zur Bildebene und/oder Rückpropagation zu bestimmen. Die rechnerische Ermittlung einer Intensitätsverteilung auf dem Bildsensor aus einer dreidimensionalen Amplitudeninformation kann beispielsweise durch eine Projektion oder durch Propagation eines Lichtfeldes ermittelt werden. Die Abbildung von dem Bildsensor in Volumenelemente des Objekts kann durch eine Projektion von der Bildebene in die Volumenelemente des Objekts oder durch Rückwärts-Propagation eines Lichtfeldes ermittelt werden. Die elektronische Verarbeitungseinrichtung kann eingerichtet sein, um iterativ eine Folge von Vorwärts-Propagationen und Rückpropagationen auszuführen.

Die elektronische Verarbeitungseinrichtung kann eingerichtet sein, um für eine Schätzung für die dreidimensionale Amplitudeninformation für einen Beleuchtungswinkel der Mehrzahl von Beleuchtungswinkeln rechnerisch zu ermitteln, welche Intensitätsverteilung sich auf dem Bildsensor ergeben würde. Die elektronische Verarbeitungseinrichtung kann eingerichtet sein, um ein Korrekturbild, das von einem Vergleich der rechnerisch bestimmten Intensitätsverteilung mit dem für die Beleuchtungsrichtung erfassten Bild abhängt, zu bestimmen. Die elektronische Verarbeitungseinrichtung kann eingerichtet sein, um das Korrekturbild rückwärts zu projizieren oder rückwärts zu propagieren. Dabei kann das Korrekturbild in Volumenelemente des Objekts abgebildet werden.

Die elektronische Verarbeitungseinrichtung kann auf unterschiedliche Weise die Intensitätsverteilung abhängig von der Schätzung und dem Beleuchtungswinkel bestimmen. Es kann eine Vorwärts-Propagation erfolgen, die auch nichtgeometrische Effekte berücksichtigt. Es kann eine Vorwärts-Projektion auf den Bildsensor berechnet werden.

Das Korrekturbild kann ein Differenzbild oder ein Quotientenbild sein.

Die elektronische Verarbeitungseinrichtung kann eingerichtet sein, um die Rückprojektion oder Rückpropagation in Volumenelemente auszuführen, die in mehreren unterschiedlichen Ebenen angeordnet sind. Die unterschiedlichen Ebenen können entlang einer optischen Achse der Vorrichtung beabstandet und jeweils senkrecht zu der optischen Achse sein.

Die elektronische Verarbeitungseinrichtung kann eingerichtet sein, um die Schätzung abhängig von der Rückprojektion zu aktualisieren.

Die elektronische Verarbeitungseinrichtung kann eingerichtet sein, um die Bestimmung des Korrekturbildes und die Rückprojektion oder Rückpropagation für wenigstens einen weiteren Beleuchtungswinkel iterativ zu wiederholen. Die elektronische Verarbeitungseinrichtung kann eingerichtet sein, um die Bestimmung des Korrekturbildes, die Rückprojektion oder Rückpropagation und die Aktualisierung der Schätzung für wenigstens einen weiteren Beleuchtungswinkel iterativ zu wiederholen.

Die elektronische Verarbeitungseinrichtung kann eingerichtet sein, um zum Rekonstruieren der dreidimensionalen Amplitudeninformation für wenigstens einen Teil der Mehrzahl von Bildern jeweils eine Verzeichnung zu invertieren, die von dem Beleuchtungswinkel bei Aufnahme des entsprechenden Bildes abhängt.

Die elektronische Verarbeitungseinrichtung kann eingerichtet sein, um zum Rekonstruieren der dreidimensionalen Amplitudeninformation einen Bilderstapel des Objekts aus der Mehrzahl von Bildern zu berechnen. Die Bilder des Bilderstapels können dabei jeweils Amplitudeninformation enthalten.

Die elektronische Verarbeitungseinrichtung kann eingerichtet sein, um zum Berechnen eines Bildes des Bilderstapels, das einen Schnitt durch das Objekt entlang einer Schnittebene repräsentiert, eine Transformation auf wenigstens einen Teil der Mehrzahl von Bilder anzuwenden, wobei die Transformation von dem Beleuchtungswinkel bei Aufnahme des entsprechenden Bildes und von einer Position der Schnittebene abhängt.

Die elektronische Verarbeitungseinrichtung kann eingerichtet sein, um einander entsprechende Strukturen in wenigstens zwei Bildern zu erkennen, die für unterschiedliche Beleuchtungswinkel erfasst wurden.

Die elektronische Verarbeitungseinrichtung kann eingerichtet sein, um Positionen der einander entsprechenden Strukturen in dem Objekt abhängig von einer Verschiebung zwischen den einander entsprechenden Strukturen in den wenigstens zwei Bildern zu bestimmen. Die elektronische Verarbeitungseinrichtung kann eingerichtet sein, um wenigstens eine Koordinate entlang der optischen Achse der Vorrichtung abhängig von einer Verschiebung zwischen den einander entsprechenden Strukturen in den wenigstens zwei Bildern zu bestimmen.

Die elektronische Verarbeitungseinrichtung kann eingerichtet sein, um abhängig von der Mehrzahl von Bildern eine dreidimensionale Phaseninformation des Objekts zu rekonstruieren.

Die Vorrichtung kann ein Mikroskopsystem sein.

Die Vorrichtung kann ein digitales Mikroskop sein.

Ein Verfahren zur dreidimensionalen Aufnahme eines Objekts nach einem Ausführungsbeispiel umfasst ein Erfassen einer Mehrzahl von Bildern, wenn das Objekt unter einer Mehrzahl von Beleuchtungswinkeln beleuchtet wird. Das Verfahren umfasst ein Verarbeiten der Mehrzahl von Bildern. Dabei wird das Objekt dreidimensional rekonstruiert. Es kann wenigstens eine dreidimensionale Amplitudeninformation des Objekts aus der Mehrzahl von Bildern rekonstruiert werden.

Das Verfahren kann von der Vorrichtung nach einem Ausführungsbeispiel automatisch ausgeführt werden.

Bei dem Verfahren kann eine Position des Detektors relativ zu dem Objekt bei der Aufnahme der Mehrzahl von Bildern unverändert sein.

Jedes Bild der Mehrzahl von Bildern kann ein Intensitätsbild sein.

Bei dem Verfahren kann die dreidimensionale Amplitudeninformation abhängig davon rekonstruiert werden, in welche Pixel des Bildsensors ein Volumenelement des Objekts für die Mehrzahl von Beleuchtungswinkel jeweils abgebildet wird.

Bei dem Verfahren kann abhängig von einem Abstand des Volumenelements von einer Fokusebene des Detektors ermittelt werden, in welche Pixel des Bildsensors das Volumenelement des Objekts für die Mehrzahl von Beleuchtungswinkel jeweils abgebildet wird. Auf diese Weise kann die Verschiebung, in die ein Abstand von der Fokusebene bei schräger Beleuchtung umgesetzt wird, gezielt zur dreidimensionalen Rekonstruktion verwendet werden.

Bei dem Verfahren kann die Amplitudeninformation mehrerer Volumenelemente des Objekts, die in mehreren unterschiedlichen Ebenen angeordnet sind, abhängig von Intensitäten rekonstruiert werden, die der Bildsensor an einem Pixel für die unterschiedlichen Beleuchtungswinkel erfasst. Dadurch kann berücksichtigt werden, welche Volumenelemente des Objekts Strahlung auf dem Weg von der Beleuchtungseinrichtung zum Detektor in unterschiedlichen Schnittebenen des Objekts jeweils durchläuft.

Bei dem Verfahren kann für jeden Beleuchtungswinkel der Mehrzahl von Beleuchtungswinkeln eine dem Beleuchtungswinkel zugeordnete Transformation auf ein Bild angewandt werden, das für den entsprechenden Beleuchtungswinkel erfasst wurde. Die Transformation kann einer virtuellen Verkippung des Detektors relativ zu dem Objekt entsprechen. Dies erlaubt es zu kompensieren, dass der Detektor abhängig vom Beleuchtungswinkel relativ zu einem Beleuchtungsstrahl verkippt sein kann.

Bei dem Verfahren kann wenigstens auf einen Teil der Mehrzahl von Bildern die dem jeweiligen Beleuchtungswinkel zugeordnete Transformation angewandt werden, um eine Mehrzahl modifizierter Bilder zu erzeugen. Aus der Mehrzahl von modifizierten Bildern kann die dreidimensionale Amplitudeninformation rekonstruiert werden.

Bei dem Verfahren kann die dreidimensionale Amplitudeninformation durch eine Folge von Vorwärts-Projektionen und Rückwärts-Projektionen bestimmt werden. Die rechnerische Ermittlung einer Intensitätsverteilung auf dem Bildsensor aus einer dreidimensionalen Amplitudeninformation kann beispielsweise durch eine Projektion oder durch Propagation eines Lichtfeldes ermittelt werden. Die Abbildung von dem Bildsensor in Volumenelemente des Objekts kann durch eine Projektion von der Bildebene in die Volumenelemente des Objekts oder durch Rückpropagation eines Lichtfeldes ermittelt werden. Die elektronische Verarbeitungseinrichtung kann eingerichtet sein, um iterativ eine Folge von Vorwärts-Propagationen und Rückpropagationen auszuführen.

Die Rekonstruktion der dreidimensionalen Information kann eine Berechnung einer Intensitätsverteilung auf dem Bildsensor aus einer Schätzung für die dreidimensionale Amplitudeninformation für einen Beleuchtungswinkel der Mehrzahl von Beleuchtungswinkeln umfassen. Die Rekonstruktion der dreidimensionalen Information kann eine Bestimmung eines Korrekturbildes, das von einem Vergleich der berechneten Intensitätsverteilung mit dem für die Beleuchtungsrichtung erfassten Bild abhängt, umfassen. Die Rekonstruktion der dreidimensionalen Information kann eine Rückprojektion oder Rückpropagation des Korrekturbilds umfassen.

Das Korrekturbild kann ein Differenzbild oder ein Quotientenbild sein.

Die Rückprojektion oder Rückpropagation des Korrekturbildes kann in Volumenelemente ausgeführt werden, die in mehreren unterschiedlichen Ebenen angeordnet sind. Die unterschiedlichen Ebenen können entlang einer optischen Achse der Vorrichtung beabstandet und jeweils senkrecht zu der optischen Achse sein.

Die Rekonstruktion der dreidimensionalen Information kann eine Aktualisierung der Schätzung abhängig von der Rückprojektion umfassen.

Die Rekonstruktion der dreidimensionalen Information kann eine iterative Widerholung der Bestimmung des Korrekturbildes und der Rückprojektion oder Rückpropagation für wenigstens einen weiteren Beleuchtungswinkel umfassen. Die Rekonstruktion der dreidimensionalen Information kann eine iterative Widerholung der Bestimmung des Korrekturbildes, der Rückprojektion oder Rückpropagation und der Aktualisierung der Schätzung für wenigstens einen weiteren Beleuchtungswinkel umfassen.

Die Rekonstruktion der dreidimensionalen Amplitudeninformation kann umfassen, dass für wenigstens einen Teil der Mehrzahl von Bildern jeweils eine Verzeichnung invertiert wird, die von dem Beleuchtungswinkel bei Aufnahme des entsprechenden Bildes abhängt.

Zum Rekonstruieren der dreidimensionalen Amplitudeninformation kann ein Bilderstapel des Objekts aus der Mehrzahl von Bildern berechnet werden.

Zum Berechnen eines Bildes des Bilderstapels, das einen Schnitt durch das Objekt entlang einer Schnittebene repräsentiert, kann eine Transformation auf wenigstens einen Teil der Mehrzahl von Bildern angewandt werden. Die Transformation kann von dem Beleuchtungswinkel bei Aufnahme des entsprechenden Bildes und von einer Position der Schnittebene abhängen.

Das Verfahren kann eine Strukturerkennung umfassen, um einander entsprechende Strukturen in wenigstens zwei Bildern zu erkennen, die für unterschiedliche Beleuchtungswinkel erfasst wurden. Die einander entsprechenden Strukturen können Abbildungen derselben Objektstruktur in unterschiedlichen Bildern sein.

Zum Rekonstruieren der dreidimensionalen Amplitudeninformation können Positionen der einander entsprechenden Strukturen in dem Objekt abhängig von einer Verschiebung zwischen den einander entsprechenden Strukturen in den wenigstens zwei Bildern bestimmt werden. Wenigstens eine Koordinate entlang einer optischen Achse kann abhängig von einer Verschiebung zwischen den einander entsprechenden Strukturen in den wenigstens zwei Bildern bestimmt werden.

Das Verfahren kann eine Rekonstruktion einer dreidimensionalen Phaseninformation des Objekts abhängig von der Mehrzahl von Bildern umfassen.

Die Vorrichtung kann ein Mikroskopsystem sein.

Die Vorrichtung kann ein digitales Mikroskop sein.

Bei den Vorrichtungen und Verfahren kann die Mehrzahl von Bildern in einer Transmissionsanordnung erfasst werden. Die Bilder können in einer Reflexionsanordnung erfasst werden.

Vorrichtungen und Verfahren nach Ausführungsbeispielen erlauben die dreidimensionale Abbildung eines Objekts, ohne eine kontrollierte Bewegung des Detektors relativ zu dem Objekt zu erfordern. Die Verarbeitung der Mehrzahl von Bildern zur Rekonstruktion wenigstens der dreidimensionalen Amplitudeninformation kann in effizienter Weise erfolgen.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

KURZE BESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

FIG. 1 ist eine schematische Darstellung einer Vorrichtung nach einem Ausführungsbeispiel.

FIG. 2 ist ein Flussdiagramm eines Verfahrens nach einem Ausführungsbeispiel.

FIG. 3 veranschaulicht die Verarbeitung einer Mehrzahl von Bildern bei Vorrichtungen und Verfahren nach Ausführungsbeispielen.

FIG. 4 veranschaulicht die Verarbeitung der Mehrzahl von Bildern mit einer Vorrichtung und einem Verfahren nach Ausführungsbeispielen, bei der eine Verkippung eines Detektors relativ zu einer Richtung einer Beleuchtung wenigstens teilweise kompensiert wird.

FIG. 5 veranschaulicht die Verarbeitung der Mehrzahl von Bildern mit einer Vorrichtung und einem Verfahren nach Ausführungsbeispielen, bei der eine Verkippung eines Detektors relativ zu einer Richtung einer Beleuchtung wenigstens teilweise kompensiert wird.

FIG. 6 ist ein Flussdiagramm eines Verfahrens nach einem Ausführungsbeispiel.

FIG. 7 ist ein Flussdiagramm eines Verfahrens nach einem Ausführungsbeispiel.

FIG. 8 ist ein Flussdiagramm eines Verfahrens nach einem Ausführungsbeispiel.

FIG. 9 veranschaulicht die Verarbeitung der Mehrzahl von Bildern mit einer Vorrichtung und einem Verfahren nach Ausführungsbeispielen, bei der ein Bilderstapel ermittelt wird.

FIG. 10 veranschaulicht die Verarbeitung der Mehrzahl von Bildern mit einer Vorrichtung und einem Verfahren nach Ausführungsbeispielen, bei der ein Bilderstapel ermittelt wird.

FIG. 11 ist ein Flussdiagramm eines Verfahrens nach einem Ausführungsbeispiel.

FIG. 12 veranschaulicht die Verarbeitung der Mehrzahl von Bildern mit einer Vorrichtung und einem Verfahren nach Ausführungsbeispielen, bei der eine Strukturerkennung zur Bestimmung einer z-Position ausgeführt wird.

FIG. 13 ist ein Flussdiagramm eines Verfahrens nach einem Ausführungsbeispiel.

FIG. 14 ist ein Flussdiagramm eines Verfahrens nach einem Ausführungsbeispiel.

FIG. 15 ist ein Blockdiagramm einer Vorrichtung nach einem Ausführungsbeispiel.

## DETAILLIERTE BESCHREIBUNG VON AUSFÜHRUNGSBEISPIELEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Darstellungen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und ihr Zweck dem Fachmann verständlich werden.

In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein.

Nachfolgend werden Techniken beschrieben, mit denen ein Objekt dreidimensional abgebildet wird. Dabei wird wenigstens eine Amplitudeninformation dreidimensional rekonstruiert. Unter einer Rekonstruktion einer dreidimensionalen Amplitudeninformation wird die Bestimmung dreidimensionaler Information verstanden, die insbesondere eine Extinktion oder optische Dichte des Objekts als Funktion des Orts in drei Dimensionen repräsentieren kann.

Wie nachfolgend ausführlicher beschrieben wird, werden bei Ausführungsbeispielen der Erfindung sequentiell mehrere Bilder eines Objekts aufgenommen. Die aufgenommenen Bilder können jeweils Intensitätsbilder sein. Ein Beleuchtungswinkel für eine Beleuchtung des Objekts wird zur Aufnahme der mehreren Bilder auf unterschiedliche Werte eingestellt. Ein Detektor, der die Bilder erfasst, kann stationär sein. Eine Position des Detektors relativ zu dem Objekt kann gleich bleiben, während die Mehrzahl von Bildern erfasst wird.

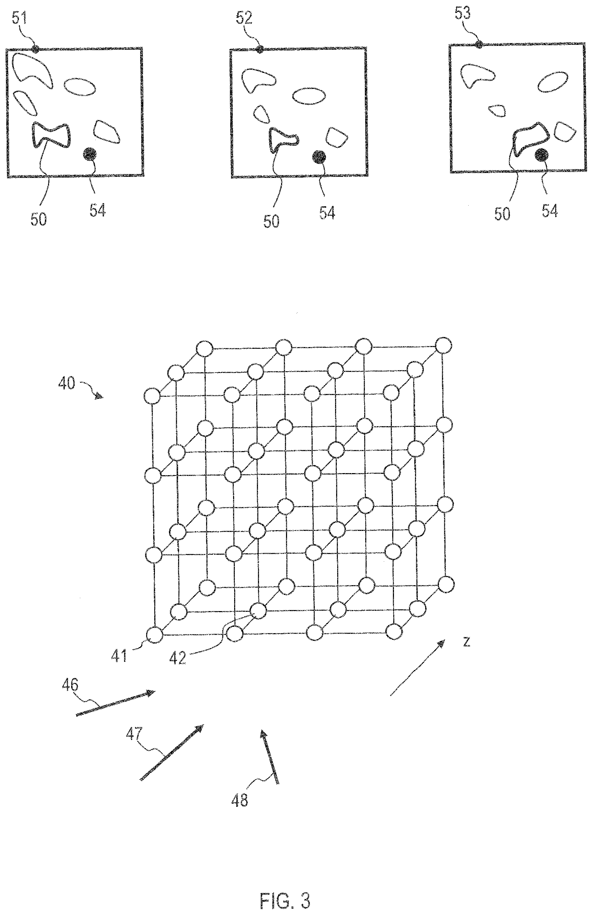

Aus der Mehrzahl von Bildern kann das Objekt dreidimensional rekonstruiert werden, wobei wenigstens die Amplitudeninformation ortsaufgelöst und dreidimensional ermittelt wird. Zur Verarbeitung der Mehrzahl von Bildern kann auf unterschiedliche Weise erfolgen, wie unter Bezugnahme auf FIG. 3 bis FIG. 14 ausführlicher beschrieben wird.

Durch die Kombination der Mehrzahl von Bildern kann auf die dreidimensionale Information des Objekts zurückgerechnet werden, da eine schräge Beleuchtung des Objekts zu einer Verschiebung des Bildes in einer Ebene des Bildsensors führt. Aus der Verschiebung, mit der einzelne Objektstrukturen in den Bildern dargestellt sind, in Abhängigkeit von dem jeweils verwendeten Beleuchtungswinkel kann auf die dreidimensionale Position der entsprechenden Struktur geschlossen werden.

Die Verarbeitung der erfassten Bilder, die die Rekonstruktion der dreidimensionalen Information beinhaltet, kann auf in einem Speichermedium einer Bildaufnahmevorrichtung nichtflüchtig gespeicherten Daten beruhen. Die Daten können für unterschiedliche Beleuchtungswinkel die jeweils anzuwendende Transformation eines Bildes und/oder Information für eine Abbildung zwischen Pixeln des Bildes und Volumenelementen (Voxel) des Objekts abhängig vom Beleuchtungswinkel umfassen.

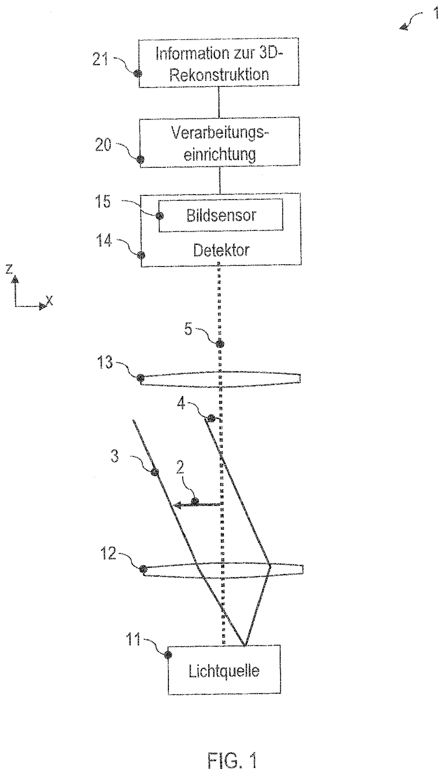

FIG. 1 ist eine schematische Darstellung einer Vorrichtung 1 zur dreidimensionalen Abbildung eines Objekts 2 nach einem Ausführungsbeispiel. Die Vorrichtung 1 kann zur automatischen Ausführung von Verfahren nach Ausführungsbeispielen ausgestaltet sei. Die Vorrichtung 1 kann ein Mikroskopsystem sein oder kann ein Mikroskop umfassen, das mit einer noch ausführlicher beschriebenen steuerbaren Beleuchtungseinrichtung, einer Kamera mit einem Bildsensor und einer elektronischen Verarbeitungseinrichtung zur Reflexunterdrückung versehen ist.

Die Vorrichtung 1 umfasst eine Beleuchtungseinrichtung mit einer Lichtquelle 11. Eine Kondensor-Linse 12 kann in an sich bekannte Weise das von der Lichtquelle 11 abgegeben Licht auf ein abzubildendes Objekt 2 lenken. Die Beleuchtungseinrichtung ist so ausgestaltet, dass Licht unter einer Mehrzahl unterschiedlicher Beleuchtungswinkel 4 auf das Objekt 2 eingestrahlt werden kann. Dazu kann beispielsweise die Lichtquelle 11 eine Leuchtdioden (LED)-Anordnung mit mehreren LEDs umfassen, die einzeln ansteuerbar sein können. Die LED-Anordnung kann eine LED-Ringanordnung sein. Alternativ kann ein steuerbares Element in einer Zwischenbildebene, in die eine herkömmliche Lichtquelle vergrößert abgebildet wird, angeordnet sein, um unterschiedliche Beleuchtungswinkel bereitzustellen. Das steuerbare Element kann eine bewegliche Lochblende, eine Mikrospiegelanordnung, eine Flüssigkeitskristallmatrix oder einen räumlichen Lichtmodulator umfassen.

Die Beleuchtungseinrichtung kann so eingerichtet sein, dass der Betrag des Beleuchtungswinkels 4, der mit einer optischen Achse 5 eingeschlossen wird, verändert werden kann. Die Beleuchtungseinrichtung kann so eingerichtet sein, dass eine Richtung des Strahls 3, mit dem das Objekt unter dem Beleuchtungswinkel 4 beleuchtet werden kann, auch in Polarrichtung um die optische Achse 5 herumbewegt werden kann. Der Beleuchtungswinkel kann in drei Dimensionen durch ein Paar von Winkelkoordinaten bestimmt sein, die hier auch als $\theta_x$ und $\theta_y$ bezeichnet werden. Der Winkel $\theta_x$ kann die Orientierung des Strahls 3 in der x-z-Ebene definieren. Der Winkel $\theta_y$ kann die Orientierung des Strahls 3 in der y-z-Ebene definieren.

Ein Detektor 14 der Vorrichtung 1 erfasst für jeden von mehreren Beleuchtungswinkeln, unter denen das Objekt 2 beleuchtet wird, jeweils mindestens ein Bild des Objekts 2. Das Bild ist jeweils in Intensitätsbild. Ein Bildsensor 15 des Detektors 14 kann beispielsweise als CCD-Sensor, CMOS-Sensor oder als ein TDI ("time delay and integration")-CCD-Sensor ausgestaltet sein. Eine Abbildungsoptik, beispielsweise ein nur schematisch dargestelltes Mikroskopobjektiv 13, kann ein vergrößertes Abbild des Objekts 2 an dem Bildsensor 15 erzeugen. Der Bildsensor 15 kann eingerichtet sein, um Intensitätsbilder zu erfassen.

Die Vorrichtung 1 umfasst eine elektronische Verarbeitungseinrichtung 20. Die elektronische Verarbeitungseinrichtung verarbeitet die Mehrzahl von Bildern weiter, die von dem Objekt 2 für die Mehrzahl von Beleuchtungswinkeln erfasst wurden. Die elektronische Verarbeitungseinrichtung 20 ist eingerichtet, um eine dreidimensionale Information des Objekts abhängig von der Mehrzahl von Bildern zu bestimmen. Wie unter Bezugnahme auf FIG. 3 bis FIG. 13 näher beschrieben wird, kann die Verarbeitung die Transformation von Bildern zur Kompensierung einer Verkippung des Detektors relativ zu einer Richtung des Strahls 3 umfassen. Die transformierten Bilder können unter Verwendung tomographischer Verfahren weiter verarbeitet werden, um die dreidimensionale Information des Objekts zu rekonstruieren. Die Verarbeitung kann eine iterative Technik umfassen, bei der eine Schätzung für das dreidimensionale Objekt für einen Beleuchtungswinkel rechnerisch in die Bildebene projiziert wird, die Projektion mit dem für diesen Beleuchtungswinkel tatsächlich erfassten Bild verglichen wird, und abhängig von dem Vergleich ein Korrekturbild bestimmt wird. Das Korrekturbild kann zurückprojiziert werden, um die Schätzung zu aktualisieren. Diese Schritte können für unterschiedliche Beleuchtungswinkel wiederholt werden. Die Verarbeitung kann alternativ oder zusätzlich auch die Berechnung eines Bilderstapels, beispielsweise eines sogenannten z-Bilderstapels oder "z-stacks", umfassen, bei dem Bilder des Bilderstapels Amplitudeninformation enthalten.

Die Vorrichtung 1 kann ein Speichermedium mit Information zur Verarbeitung der Mehrzahl von Bildern 21 umfassen. Die elektronische Verarbeitungseinrichtung 20 ist mit dem Speichermedium gekoppelt oder kann dieses umfassen. Die elektronische Verarbeitungseinrichtung 20 kann Transformationen, die für jeden Beleuchtungswinkel auf das für diesen Beleuchtungswinkel jeweils aufgenommene Bild anzuwenden sind, abhängig von der Information in dem Speichermedium ermitteln.

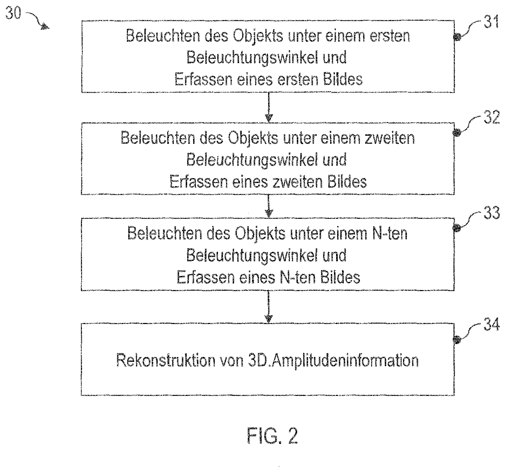

Die Funktionsweise der Vorrichtung nach Ausführungsbeispielen wird unter Bezugnahme auf FIG. 2 bis FIG. 15 näher beschrieben.

FIG. 2 ist ein Flussdiagramm eines Verfahrens 30 nach einem Ausführungsbeispiel. Das Verfahren kann von der Bildaufnahmevorrichtung 1 automatisch ausgeführt werden.

Bei Schritt 31 wird das Objekt unter einem ersten Beleuchtungswinkel beleuchtet. Die Beleuchtungseinrichtung kann beispielsweise von der elektronischen Verarbeitungseinrichtung 20 so angesteuert werden, dass das Objekt unter dem ersten Beleuchtungswinkel beleuchtet wird. Der Bildsensor 15 erfasst ein erstes Bild. Das erste Bild kann ein erstes Intensitätsbild sein.

Bei Schritt 32 wird das Objekt unter einem von dem ersten Beleuchtungswinkel verschiedenen zweiten Beleuchtungswinkel beleuchtet. Dazu kann die Beleuchtungseinrichtung entsprechend angesteuert werden. Der Bildsensor 15 erfasst ein zweites Bild. Das zweite Bild kann ein zweites Intensitätsbild sein.

Die sequentielle Beleuchtung des Objekts unter unterschiedlichen Beleuchtungswinkeln und Bildaufnahme kann wiederholt werden.

Bei Schritt 33 wird das Objekt unter einem N-ten Beleuchtungswinkel beleuchtet, wobei N eine ganze Zahl > 2 ist. Dazu kann die Beleuchtungseinrichtung entsprechend angesteuert werden. Der Bildsensor 15 erfasst ein N-tes Bild. Die Anzahl von Bildern N kann >> 1 sein. Es können auch mehrere Bilder für einen Beleuchtungswinkel erfasst werden.

Bei Schritt 34 wird abhängig von der Mehrzahl von Bildern die dreidimensionale Information des Objekts rekonstruiert. Es kann die Amplitudeninformation rekonstruiert werden. Es kann optional auch die Phaseninformation rekonstruiert werden. Verschiedene Techniken können zur Verarbeitung der Mehrzahl von Bildern verwendet werden, wie unter Bezugnahme auf FIG. 3 bis FIG. 14 ausführlicher beschrieben wird.

Zur Rekonstruktion der dreidimensionalen Information des Objekts kann auf verschiedene Weise genutzt werden, wie Volumenelemente des Objekts für die verschiedenen Beleuchtungswinkel jeweils in Pixel des Bildsensors 15 abgebildet werden, wie nachfolgend ausführlicher beschrieben wird. Die Rekonstruktion der dreidimensionalen Information kann beinhalten, dass für eine Mehrzahl von Volumenelementen (die in der Technik auch als Voxel bezeichnet werden) eines Volumens, in dem das Objekt positioniert ist, jeweils ein Amplitudenwert ermittelt wird. Der Amplitudenwert kann die Extinktion oder optische Dichte des Objekts an der entsprechenden Position des Volumenelements repräsentieren. Die Volumenelemente können in einem regulären Gitter oder einem irregulären Gitter angeordnet sein.

Gemäß der Terminologie in diesem Feld wird verkürzend auch davon gesprochen, dass Volumenelemente berechnet werden oder Volumenelemente rekonstruiert werden, wobei es sich versteht, dass wenigstens ein Amplitudenwert, der beispielsweise die Extinktion oder optische Dichte des Objekts an der entsprechenden Position angeben kann, für dieses Volumenelement berechnet wird.

Information, wie Volumenelemente für die Mehrzahl von Beleuchtungsrichtungen jeweils in Pixel des Bildsensors abgebildet werden, kann auf unterschiedliche Weise genutzt werden, wie unter Bezugnahme auf FIG. 3 bis FIG. 13 ausführlich beschrieben wird.

Wie unter Bezugnahme auf FIG. 3 bis FIG. 8 beschrieben wird, kann die dreidimensionale Amplitudeninformation mit Techniken berechnet werden, bei denen eine Rückprojektion von der Bildebene des Bildsensors in die Volumenelemente erfolgt. Die Rückprojektion erfolgt beleuchtungswinkelabhängig und ist entsprechend für Bilder, die unter unterschiedlichen Beleuchtungswinkeln aufgenommen wurden, verschieden. Bei der Rückprojektion wird berücksichtigt, dass der Strahl 3 durch mehrere Volumenelemente tritt, die in unterschiedlichen Ebenen entlang der optischen Achse angeordnet sind, bevor er auf ein Pixel des Bildsensors auftrifft.

Die Rückprojektion kann so erfolgen, dass zunächst die aufgenommenen Bilder abhängig vom Beleuchtungswinkel transformiert werden, um eine Verkippung des Bildsensors relativ zum Strahl 3 zu kompensieren. Die transformierten Bilder können dann in die Volumenelemente rückprojiziert werden.

Die Rückprojektion kann auch derart erfolgen, dass in einem iterativen Verfahren eine Projektion einer Schätzung für die dreidimensionale Amplitudeninformation auf den Bildsensor berechnet wird. Ein Korrekturbild hängt von einem Vergleich der Projektion der Schätzung und dem für den entsprechenden Beleuchtungswinkel tatsächlich erfassten Bild ab. Das Korrekturbild kann in die Volumenelemente rückprojiziert werden, um die Schätzung zu aktualisieren. Diese Schritte können iterativ für unterschiedliche Beleuchtungswinkel wiederholt werden, bis ein Konvergenzkriterium erfüllt ist.

FIG. 3 veranschaulicht die Rekonstruktion der dreidimensionalen Information bei Verfahren und Vorrichtungen nach Ausführungsbeispielen. Um die dreidimensionale Information des Objekts 2 zu ermitteln, wird Volumenelementen 41, 42 eines Gitters 40 jeweils wenigstens ein Wert zugeordnet, der abhängig von der Mehrzahl von erfassten Bildern 51-53 bestimmt wird. Die Vertizes 41, 42 des Gitters 40 repräsentieren Volumenelemente und können dabei beispielsweise Mittelpunkte, Ecken oder Kantenmittelpunkte der jeweiligen Volumenelemente darstellen.

Für Strahlen 46-48, die sequentiell zur Beleuchtung unter unterschiedlichen Beleuchtungswinkeln verwendet werden, führt die schräge Beleuchtung zu einer Verzeichnung der Abbildung des Objekts auf der Ebene des Bildsensors. Die Verzeichnung resultiert aus der veränderlichen Verkippung der Ebene des Bildsensors relativ zur Richtung des Strahls 46-48 in Abhängigkeit von dem Beleuchtungswinkel.

Ein Volumenelement 41 des Objekts wird entsprechend abhängig von der Beleuchtungsrichtung in unterschiedliche Pixel des Bildsensors 15 abgebildet. Eine Struktur 50 in unterschiedlichen Bildern 51-53 kann in unterschiedlichen Bildbereichen dargestellt sein, kann aber jeweils aus der Projektion des Volumenelements 41 und weiterer Volumenelemente in die Bildebene des Bildsensors 15 erzeugt werden.

Umgekehrt erfasst jedes Pixel 54 des Bildsensors für unterschiedliche Beleuchtungsrichtungen des Strahls 46-48 eine Intensitätsinformation, die von der Extinktion oder optischen Dichte mehrerer entlang des Strahls 46-48 hintereinander angeordneten Volumenelementen abhängt.

Durch die Kombination der beleuchtungswinkelabhängigen Verzeichnung mehrerer Bilder 51-53 kann bei Ausführungsbeispielen die dreidimensionale Information des Objekts rekonstruiert werden.

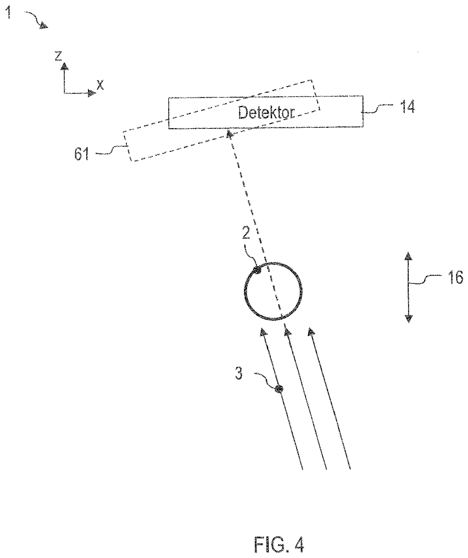

FIG. 4 veranschaulicht die Funktionsweise der Rekonstruktion der dreidimensionalen Information des Objekts bei einem Ausführungsbeispiel.

Der Strahl 3 kann relativ zur x-z-Ebene und/oder relativ zur x-y-Ebene geneigt sein. Die Richtung des Strahls 3 definiert einen Winkel in drei Dimensionen, der durch zwei Winkelkoordinaten repräsentiert werden kann, die beispielsweise die Neigung relativ zur x-z-Ebene und relativ zur x-y-Ebene angeben können.

Die Mittelachse des Detektors 14 ist für wenigstens einige der Beleuchtungswinkel relativ zu der Richtung des Strahls 3 verkippt. Dies steht im Gegensatz zu herkömmlichen Tomographieverfahren, bei denen Lichtquelle und Bildsensor gemeinsam relativ zu dem Objekt 2 bewegt werden. Die Verkippung führt dazu, dass die Mittelachse des Strahls 3 nicht senkrecht auf der sensitiven Ebene des Bildsensors 15 steht. Dies führt zu beleuchtungswinkelabhängigen Verzeichnungen.

Zur Rekonstruktion der Objektinformation kann wie folgt vorgegangen werden: Zunächst wird wenigstens ein Teil der erfassten Bilder einer Transformation unterzogen. Die Transformation kann von Beleuchtungswinkel bei Erfassung des jeweiligen Bildes abhängen. Die Transformation kann so gewählt sein, dass sie das von dem Detektor 14 erfasste Bild in ein transformiertes Bild abbildet, wie es von dem Detektor 14 an einer virtuell verkippten Position 61 erfasst werden würde. Die Transformationsmatrix, mit der Koordinaten des tatsächlich erfassten Bildes in Koordinaten des transformierten Bildes abgebildet werden, kann beispielsweise ein Produkt von wenigstens zwei Eulermatrizen beinhalten. Die zwei Eulermatrizen können eine Verkippung der Mittelachse des Detektors 14 um die Winkel $\theta_x$ und $\theta_y$ relativ zu dem Strahl 3 repräsentieren.

Für jeden Beleuchtungswinkel kann die Transformation vorab berechnet und nichtflüchtig in dem Speichermedium der Vorrichtung 1 gespeichert sein. Die Transformation kann beispielsweise als Matrix oder andere Abbildungsvorschrift für jeden der Beleuchtungswinkel gespeichert sein, die das erfasste Bild in ein transformiertes Bild abbildet. Das transformierte Bild kompensiert dabei die Verkippung zwischen der Mittelachse des Detektors 14 und dem Strahl 3 und approximiert somit das Bild, das von dem Detektor 14 erfasst worden wäre, wenn der Detektor 14 gemeinsam mit dem Strahl 3 um das Objekt 2 geführt worden wäre.

Die transformierten Bilder können dann in die Volumenelemente des Gitters 40 rückprojiziert werden. Da die transformierten Bilder die Verkippung zwischen Detektor 14 und Strahl 3 kompensieren, können aus herkömmlichen Tomographieverfahren bekannte Rückprojektionstechniken verwendet werden.

Die transformierten Bilder können durch eine gefilterte Rückprojektion in die Volumenelemente zurückprojiziert werden. Die transformierten Bilder können durch eine inverse Radontransformation verarbeitet werden, um die dreidimensionale Information des Objekts zu ermitteln.

Bei der Verarbeitung der transformierten Bilder kann beispielsweise der Wert eines Pixels des transformierten Bilds zu dem Wert für jedes Volumenelement addiert werden, das für den entsprechenden Beleuchtungswinkel in das Pixel des transformierten Bildes abgebildet wird. Dies kann für die unterschiedlichen Beleuchtungswinkel wiederholt werden. Der Wert der Amplitudeninformation für ein Volumenelement kann so ermittelt werden als Summe der Pixelwerte der verschiedenen Bilder, in die das entsprechende Volumenelement für die unterschiedlichen Beleuchtungswinkel abgebildet wird. Diese Summe ist ein Maß für die Extinktion oder optische Dichte des Objekts an der entsprechenden Position. Anstelle einer Summation kann auch eine andere Linearkombination erfolgen, wobei Koeffizienten für unterschiedliche transformierte Bilder in der Linearkombination unterschiedlich sein können.

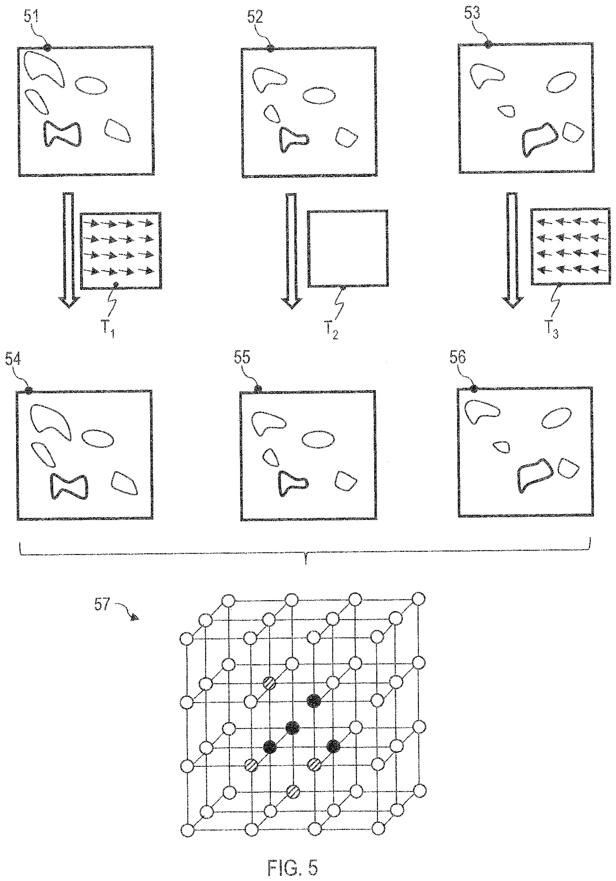

FIG. 5 veranschaulicht die Arbeitsweise von Vorrichtungen und Verfahren, bei denen die erfassten Bilder 51-53 so transformiert werden, dass die Verkippung zwischen optischer Achse des Detektors 14 und Strahlrichtung wenigstens teilweise kompensiert wird. Für Bilder 51, 53, für die der Strahl 3 nicht mit der optischen Achse des Detektors 14 ausgerichtet ist und nicht auf der sensitiven Ebene des Bildsensors 15 senkrecht steht, wird eine Transformation $T_1$, $T_3$ ermittelt. Die Transformation $T_1$, $T_3$ kann jeweils ein Verzeichnungsfeld sein. Das Verzeichnungsfeld repräsentiert die Verzeichnung aufgrund der Verkippung zwischen Detektor und Strahl. Für das Bild 52, für das die optische Achse des Detektors mit dem Strahl 3 ausgerichtet ist, kann die Transformation $T_2$ eine Identitätstransformation sein. Für mehrere der Bilder 51, 53 wird durch die Transformation das aufgenommene Bild 51, 53 verschoben und/oder entzerrt.

Auf jedes Bild 51-53 wird die Transformation angewandt, die dem jeweiligen Beleuchtungswinkel zugeordnet ist. Auf diese Weise werden transformierte Bilder 54-56 ermittelt. Die transformierten Bilder 54-56 approximieren die Bilder, die von einem beleuchtungswinkelabhängig mitgeführten Detektor erfasst worden wären. Die transformierten Bilder 54-56 können unter Verwendung jedes Algorithmus, der zur Rekonstruktion der dreidimensionalen Information bei herkömmlichen Tomographieverfahren verwendet wird, verarbeitet werden. Es kann beispielsweise eine inverse Radontransformation oder eine gefilterte Rückprojektion verwendet werden.

Durch die Verarbeitung der transformierten Bilder 54-56 kann die dreidimensionale Information 57 rekonstruiert werden. Dabei kann für jedes Volumenelement eines Voxelgitters ein Amplitudenwert ermittelt werden. Der Amplitudenwert kann von der Extinktion oder optischen Dichte des Objekts 2 an der entsprechenden Position abhängen. Der Amplitudenwert kann die Extinktion oder optische Dichte des Objekts 2 an der entsprechenden Position repräsentieren. In FIG: 5 ist die unterschiedliche optische Dichte, die durch Rekonstruktion ermittelt wird, schematisch durch unterschiedliche Füllungen der Vertizes des Voxelgitters 40 dargestellt.

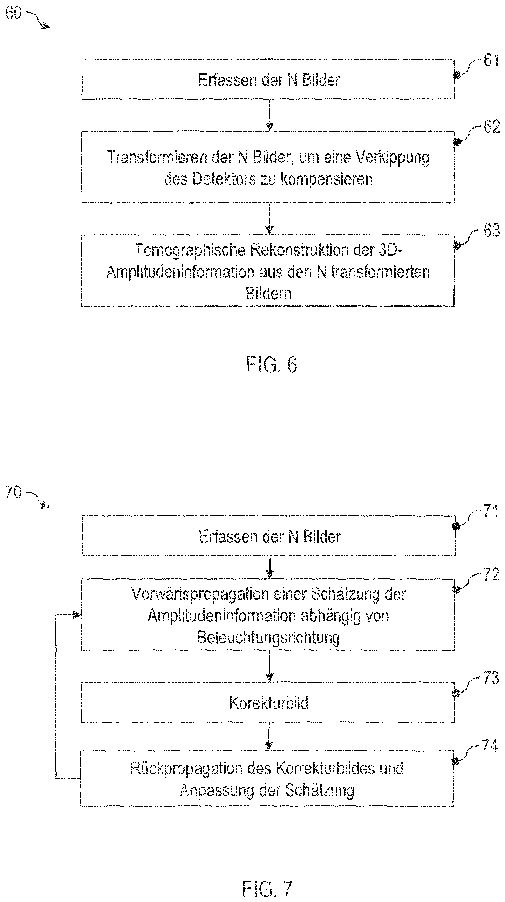

FIG. 6 ist ein Flussdiagramm eines Verfahrens 60, das von der Vorrichtung nach einem Ausführungsbeispiel automatisch ausgeführt werden kann. Bei dem Verfahren werden die Bilder zunächst transformiert, um die Verkippung zwischen optischer Achse des Detektors 14 und Strahlrichtung wenigstens teilweise zu kompensieren. Die transformierten Bilder werden als Eingangsgrößen für einen Tomographie-Algorithmus verwendet.

Bei Schritt 61 werden N Bilder des Objekts aufgenommen. Die N Bilder können sequentiell für unterschiedliche Beleuchtungswinkel aufgenommen werden. Für jeden Beleuchtungswinkel einer Mehrzahl von Beleuchtungswinkeln kann jeweils wenigstens ein Intensitätsbild erfasst werden. Für mehrere der Beleuchtungswinkel wird das Objekt schräg beleuchtet, und Strahl der Beleuchtung und optische Achse des Detektors sind nicht parallel zueinander.

Bei Schritt 62 werden alle oder wenigstens ein Teil der N Bilder transformiert. Die Transformation hängt von dem jeweiligen Beleuchtungswinkel ab. Die Transformation kann eine Verkippung des Detektors relativ zu der Strahlachse des Beleuchtungsstrahls kompensieren. Durch die Transformation können Bilder approximiert werden, die von einem mit dem Beleuchtungsstrahl mitgeführten Detektor erfasst worden wären. Die Transformation kann Koordinaten der erfassten Bilder so in Koordinaten der transformierten Bilder abbilden, dass die Verkippung des Detektors kompensiert wird.

Bei Schritt 63 erfolgt eine tomographische Rekonstruktion der Information des Objekts aus den transformierten Bildern. Die Rekonstruktion kann jeden einer Vielzahl an sich bekannter Tomographiealgorithmen verwenden, wie beispielsweise eine inverse Radontransformation oder eine gefilterte Rückprojektion. Im Gegensatz zu herkömmlichen Tomographieverfahren werden jedoch als Eingangsgröße die transformierten Bilder des Schritts 62 verwendet, die berücksichtigen, dass der Detektor 14 seine Position relativ zu dem Objekt 2 beibehält, auch wenn die Beleuchtung unter unterschiedlichen Winkeln auf das Objekt 2 fällt.

Bei Schritt 63 kann wenigstens Amplitudeninformation des Objekts rekonstruiert werden, die von der Extinktion oder optischen Dichte als Funktion des Orts abhängt. Durch Differenzbildung der erfassten Bilder in Kombination mit Rückprojektion kann optional auch eine Phaseninformation dreidimensional rekonstruiert werden.

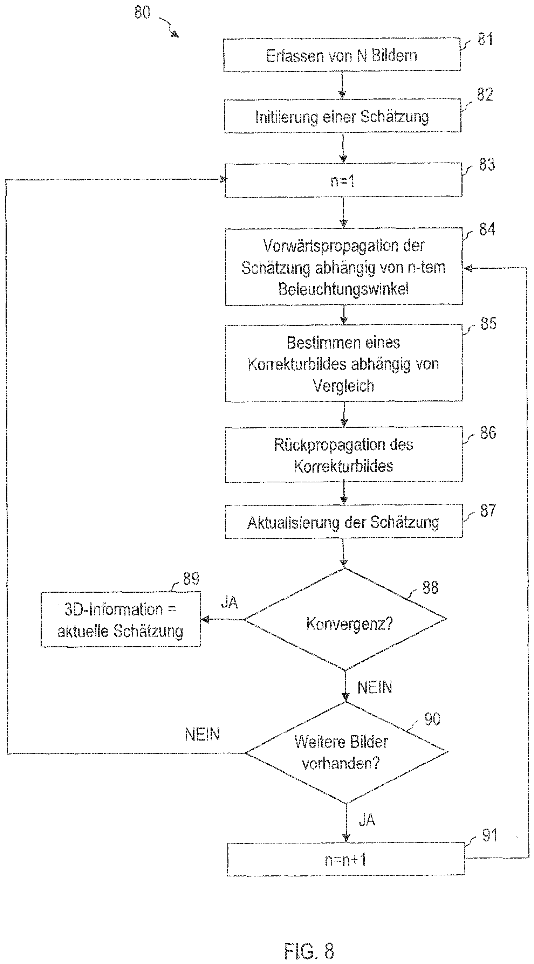

Das Verfahren 60 kann so ausgeführt werden, dass es keine Iteration beinhaltet. Dies erlaubt eine besonders effiziente und rasche Bestimmung der dreidimensionalen Information. Alternativ können auch iterative Rekonstruktionstechniken verwendet werden. Beispielsweise kann die gemäß dem Verfahren 60 erhaltene dreidimensionale Amplitudeninformation durch iterative Schritte weiter verbessert werden und kann dazu als initiale Schätzung für eine iterative Technik verwendet werden, wie sie unter Bezugnahme auf FIG. 7 und FIG. 8 näher beschrieben wird.

FIG. 7 und FIG. 8 sind Flussdiagramm von iterativen Verfahren, die von einer Vorrichtung nach einem Ausführungsbeispiel ausgeführt werden können.

Allgemein wird bei diesen Verfahren ausgehend von einer initialen Schätzung für die dreidimensionale Amplitudeninformation die Schätzung iterativ verbessert. Jede Iteration kann eine rechnerische Vorwärtsprojektion oder Vorwärts-Propagation der Schätzung in die Bildebene für einen Beleuchtungswinkel umfassen. Die Pixel, in die die Volumenelemente abgebildet werden, hängen von dem Beleuchtungswinkel ab. Die Projektion oder Vorwärts-Propagation der Schätzung repräsentiert das Bild, das man erhalten würde, wenn die Schätzung die Amplitudeninformation des Objekts 2 korrekt wiedergibt. Durch einen Vergleich der so aus der Schätzung rechnerisch ermittelten Intensität am Bildsensor mit dem für diesen Beleuchtungswinkel tatsächlich erfassten Bild kann ein Korrekturbild bestimmt werden. Das Korrekturbild kann beispielsweise ein Differenzbild oder ein Quotientenbild sein.

Das Korrekturbild kann von der Bildebene in die Volumenelemente des Voxelgitters rückprojiziert werden. Dabei erfolgt die Rückprojektion oder Rückpropagation des Korrekturbilds in alle Ebenen des Voxelgitters und nicht nur in eine einzige Ebene mit fester Position entlang der z-Achse, die durch die optische Achse 5 definiert sein kann. Die Rückprojektion kann beispielsweise als gefilterte Rückprojektion oder inverse Radontransformation umgesetzt werden. Die Rückpropagation kann auch nichtgeometrische Effekte wie Beugung berücksichtigen. Die Schätzung kann abhängig von der Rückprojektion oder Rückpropagation des Korrekturbildes aktualisiert werden.

Die Schritte können iterativ wiederholt werden, wobei unterschiedliche Beleuchtungsrichtungen verwendet werden. Sowohl die Propagation von dem Volumenelementen in die Ebene des Bildsensors zur Bestimmung der Projektion als auch die Rückpropagation des Korrekturbilds von der Ebene des Bildsensors in die Volumenelemente hängt jeweils von dem Beleuchtungswinkel ab. Durch Iteration über unterschiedliche Beleuchtungswinkel kann die dreidimensionale Information rekonstruiert werden.

FIG. 7 ist ein Flussdiagramm eines Verfahrens 70. Bei Schritt 71 wird eine Mehrzahl von Bildern erfasst. Die Bilder können sequentiell für unterschiedliche Beleuchtungswinkel aufgenommen werden. Für jeden Beleuchtungswinkel einer Mehrzahl von Beleuchtungswinkeln kann jeweils wenigstens ein Intensitätsbild erfasst werden. Für mehrere der Beleuchtungswinkel wird das Objekt schräg beleuchtet, und der Strahl der Beleuchtung und die optische Achse des Detektors sind nicht parallel zueinander.

Bei Schritt 72 wird eine Schätzung der dreidimensionalen Amplitudeninformation, beispielsweise Werte für Vertizes eines Voxelgitters, auf die Ebene des Bildsensors vorwärtspropagiert. Die Abbildung zwischen Volumenelementen und Pixeln hängt von dem Beleuchtungswinkel ab. Die Abbildung zwischen Volumenelementen des Voxelgitters und Pixeln kann vorab bestimmt und nichtflüchtig in einem Speichermedium der Vorrichtung 1 gespeichert sein. Die Abbildung zwischen Volumenelementen des Voxelgitters und Pixeln kann von der elektronischen Verarbeitungseinrichtung 20 auch automatisch für den jeweiligen Beleuchtungswinkel bestimmt werden, beispielsweise durch geometrische Projektionsverfahren.

Bei Schritt 73 wird ein Korrekturbild berechnet. Als Korrekturbild wird hier allgemein die ortsaufgelöste Information über Abweichungen zwischen der vorwärtspropagierten Schätzung und dem für diesen Beleuchtungswinkel aufgenommenen Bild. Das Korrekturbild kann eine Funktion sein, deren Werte definieren, wie die auf die Bildebene rechnerisch vorwärtspropagierte Schätzung abgewandelt werden müsste, um das tatsächlich erfasste Bild zu erhalten.

Beispielsweise kann das Korrekturbild eine Korrekturfunktion sein, die gegeben ist als

$$C(q, r, \theta_x, \theta_y) = I(q, r, \theta_x, \theta_y) - I_{prop}(q, r, \theta_x, \theta_y) [E_{obj}]. \qquad (1)$$

Hier bezeichnen q und r Koordinaten in der Bildebene des Sensors, beispielsweise Pixelkoordinaten. $I(q, r, \theta_x, \theta_y)$ ist die Intensität des Bildes, das für Beleuchtung unter dem durch die Winkelkoordinaten $\theta_x$ und $\theta_y$ erfasst wurde, am Pixel $(q, r)$. $I_{prop}(q, r, \theta_x, \theta_y) [E_{obj}]$ ist die Intensität der vorwärtspropagierten Schätzung der dreidimensionalen Information des Objekts $E_{obj}$ für den Beleuchtungswinkel mit den Winkelkoordinaten $\theta_x$ und $\theta_y$ in die Bildebene am Ort $(q, r)$. $C(q, r, \theta_x, \theta_y)$ bezeichnet den Wert des Korrekturbildes am Orts $(q, r)$.

Andere Definitionen des Korrekturbildes können verwendet werden, beispielsweise ein Quotient zwischen erfasster Intensität und durch Vorwärtspropagation der Schätzung ermittelter Intensität. Die Korrekturinformation kann in diesem Fall definiert sein als

$$C(q, r, \theta_x, \theta_y) = I(q, r, \theta_x, \theta_y) / I_{prop}(q, r, \theta_x, \theta_y) [E_{obj}]. \qquad (2)$$

für alle Pixel, für die $I_{prop}(q, r, \theta_x, \theta_y) [E_{obj}] \neq 0$.

Bei Schritt 74 kann das Korrekturbild rückwärtspropagiert werden. Die Rückpropagation kann abhängig von der Optik des Detektors rechnerisch ermittelt werden und kann beispielsweise auch nichtgeometrische Effekte wie Beugung berücksichtigen. Die Rückpropagation kann eine Abbildung sein, die ein Pixel des Bildsensors in Volumenelemente in mehreren Ebenen des Objekts abbildet. Die die Rückpropagation definierende Abbildung kann vorab bestimmt und nichtflüchtig in einem Speichermedium der Vorrichtung 1 gespeichert sein.

Die Schätzung des Objekts wird gemäß dem rückwärtspropagierten Korrekturbild aktualisiert. Beispielsweise kann eine Aktualisierung gemäß

$$E_{obj} \rightarrow E_{obj} + B(C(\theta_x, \theta_y), \theta_x, \theta_y) \tag{3}$$

erfolgen, wobei B die Operation der Rücktransformation bezeichnet, die von den Winkelkoordinaten $\theta_x$, $\theta_y$ anhängt, und wobei $C(\theta_x, \theta_y)$ das Korrekturbild bezeichnet.

FIG. 8 ist ein Flussdiagramm eines Verfahrens 80.

Bei Schritt 81 wird eine Mehrzahl von Bildern erfasst. Dies kann wie für Schritt 71 erläutert ausgeführt werden.

Bei Schritt 82 wird eine Schätzung wenigstens für die Amplitudeninformation des Objekts in drei Dimensionen initialisiert. Die Initialisierung kann beispielsweise jedem Vertex des Voxelgitters denselben Wert zuweisen, was einem homogenen Objekt entspricht. Es können zufällige Werte zugewiesen werden. Die initiale Schätzung wird iterativ verbessert. Vorab-Information über das Objekt kann verwendet werden, ist aber nicht erforderlich, da eine iterative Verbesserung erfolgt.

Bei Schritt 83 wird eine Iteration initialisiert. Der Laufindex der Iteration ist hier mit n bezeichnet. Unterschiedliche n können beispielsweise den unterschiedlichen Bildern oder unterschiedlichen Beleuchtungswinkeln zugeordnet sein. Nachfolgend wird n auch zur Indexierung der unterschiedlichen Bildaufnahmewinkel verwendet, wobei andere Laufvariablen verwendet werden können.

Bei Schritt 84 wird die Schätzung vorwärtspropagiert. Dies kann eine Projektion oder andere Propagation von Volumenelementen der Schätzung auf die Ebene des Bildsensors umfassen. Die Vorwärtspropagation hängt von dem Beleuchtungswinkel ab. Die Abbildung kann für den jeweiligen Beleuchtungswinkel nichtflüchtig gespeichert sein, beispielsweise in Form einer Abbildungsmatrix, die die in einem Vektor zusammengefassten Voxelwerte in Pixelwerte des Bildsensors abbildet.

Bei Schritt 85 kann ein Korrekturbild bestimmt werden. Das Korrekturbild hängt von der Vorwärtspropagation der Schätzung und dem für diesen Beleuchtungswinkel wirklich erfassten Bild ab. Das Korrekturbild kann eine ortsabhängige Funktion definieren, mit der die Vorwärtspropagation der Schätzung in das wirklich erfasste Bild abgebildet werden könnte. Das Korrekturbild kann wie unter Bezugnahme auf Gleichungen (1) oder (2) bestimmt werden.

Bei Schritt 86 kann das Korrekturbild rückwärtspropagiert werden. Die Rückpropagation hängt von dem Beleuchtungswinkel ab, für den auch die Vorwärtspropagation berechnet wurde. Die Rückpropagation definiert eine Abbildung in mehrere Ebenen des Voxelgitters. Die Rückpropagation kann beispielsweise als gefilterte Rückprojektion oder inverse Radontransformation implementiert werden.

Bei Schritt 87 kann die Schätzung aktualisiert werden. Dabei kann für jedes Volumenelement des Voxelgitters der diesem Volumenelement zugeordnete Wert aktualisiert werden. Dazu kann beispielsweise voxelweise die Rückprojektion der Korrekturinformation zu dem aktuellen Wert addiert werden.

Bei Schritt 88 kann überprüft werden, ob die Schätzung konvergiert. Dazu kann eine Differenz zwischen den Schätzungen in aufeinanderfolgenden Iterationen berechnet und durch eine Metrik bewertet werden. Es kann jede geeignete Metrik verwendet werden, beispielsweise eine entropiebasierte Metrik. Die Konvergenzprüfung bei Schritt 88 kann auch verzögert werden, bis die Iteration wenigstens einmal für jeden Beleuchtungswinkel ausgeführt wurde, für den eine Bilderfassung vorgenommen wurde.

Falls ein Konvergenzkriterium erfüllt ist, wird bei Schritt 89 die aktuelle Schätzung als dreidimensionale Information des Objekts verwendet, die mit dem Verfahren rekonstruiert wird.

Falls das Konvergenzkriterium nicht erfüllt ist, kann bei Schritt 90 überprüft werden, ob weitere Bilder vorhanden sind, die noch nicht in die Iteration einbezogen wurde. Falls derartige weitere Bilder vorhanden sind, kann bei Schritt 91 die Laufvariable n inkrementiert werden. Das Verfahren kann zu Schritt 84 zurückkehren. Dabei wird die Vorwärtspropagation der Schätzung und anschließende Rückpropagation des Korrekturbildes nunmehr für einen anderen Beleuchtungswinkel ausgeführt.

Falls bei Schritt 90 bestimmt wird, dass bereits alle Bilder verwendet wurden, aber noch keine Konvergenz vorliegt, kann die Iteration ausgehend von der aktuellen Schätzung erneut gestartet werden und das Verfahren kann zu Schritt 83 zurückkehren. Es kann somit auch mehrfach über die unterschiedlichen Beleuchtungswinkel iteriert werden.

Die Verfahren 70 und 80 können auch auf komplexe Bilder ausgedehnt werden. Dies ermöglicht die Bestimmung von Phaseninformation des Objekts zusätzlich zur Amplitudeninformation.

Bei den Techniken, die unter Bezugnahme auf FIG. 3 bis FIG. 8 näher beschrieben wurden, werden Volumenelemente unterschiedlicher Ebenen des Voxelgitters gleichzeitig rekonstruiert. Die Rückprojektion erfolgt regelmäßig in mehrere entlang der optischen Achse (z-Achse) hintereinander angeordnete Ebenen des Voxelgitters.

Alternativ oder zusätzlich können Vorrichtungen und Verfahren nach Ausführungsbeispielen auch so eingerichtet sein, dass das Objekt 2 schichtweise rekonstruiert wird. Dazu kann ein Bilderstapel von Bildern berechnet werden. Die Bilder des Bilderstapels können entlang der optischen Achse hintereinander angeordnete Schnitte durch das Objekt 2 repräsentieren.

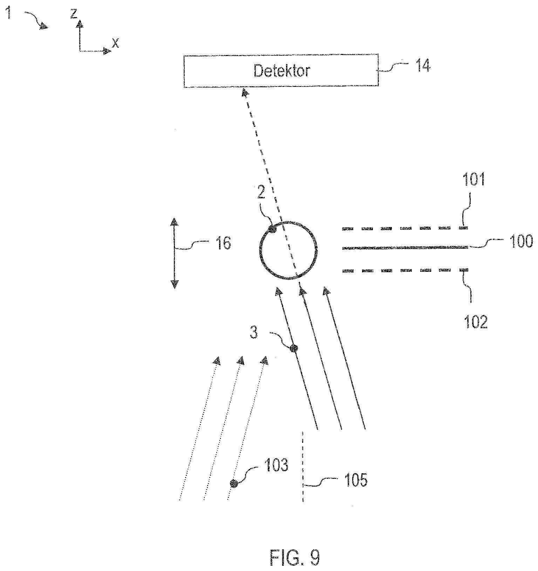

Wie unter Bezugnahme auf FIG. 9 bis FIG. 13 näher beschrieben wird, kann bei diesen Techniken ausgenutzt werden, dass unterschiedlicher Abstand von Objektebenen von einer Fokusebene des Detektors 14 zu unterschiedlichen Verzeichnungen in der Bildebene des Bildsensors 14 führt.

FIG. 9 zeigt schematisch eine Vorrichtung 1 nach einem Ausführungsbeispiel. Mehrere Objektebenen 101, 102 können von einer Fokusebene 100 des Detektors 14 entlang der z-Achse 105, die durch die optische Achse definiert wird, verschoben sein. Die Abmessung des Objekts 2 entlang der optischen Achse 105 kann kleiner als eine Schärfentiefe 16 des Detektors 14 sein. D.h., die Verbreiterung der Punktspreizfunktion quer zur optischen Achse 105 ist vernachlässigbar.

Strukturen des Objekts 2 werden in den Bildern abhängig von der Richtung der Beleuchtung 3, 103 und abhängig von der Objektebene, in der sie angeordnet sind, verzeichnet. Eine Struktur in der Objektebene 101 kann für Beleuchtung mit Strahlen 3, 103, die unterschiedlichen Beleuchtungswinkeln entsprechen, an unterschiedlichen Positionen in den jeweils erfassten Bildern erscheinen. Ähnlich kann eine Struktur in der Objektebene 102 für Beleuchtung mit Strahlen 3, 103, die unterschiedlichen Beleuchtungswinkeln entsprechen, an unterschiedlichen Positionen in den jeweils erfassten Bildern erscheinen. Für eine Beleuchtungsrichtung 3, 103 kann die Position einer Struktur im Objekt abhängig von einem Abstand zur Fokusebene 100 variieren. Die Position im Bild kann abhängig davon, ob die Struktur intrafokal oder extrafokal verschoben ist, variieren.

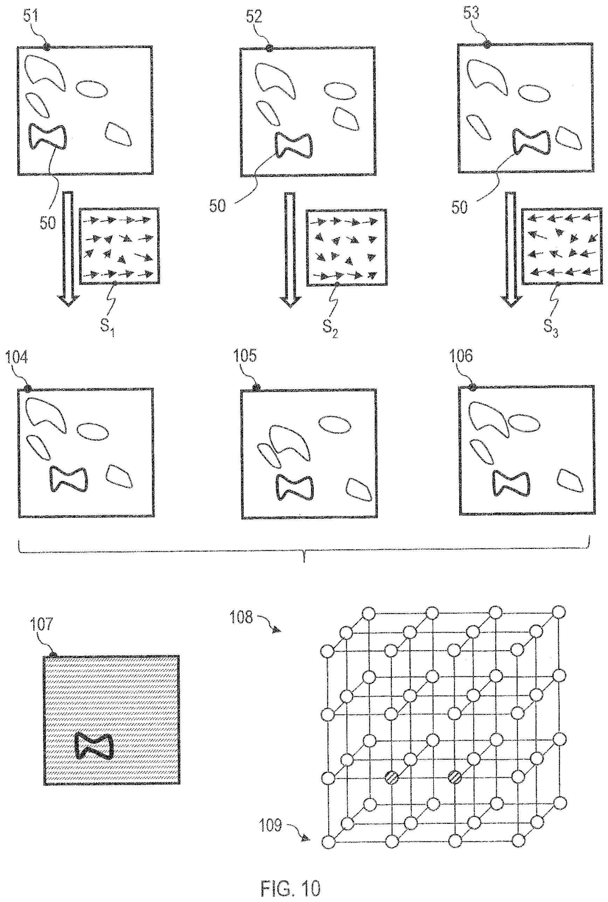

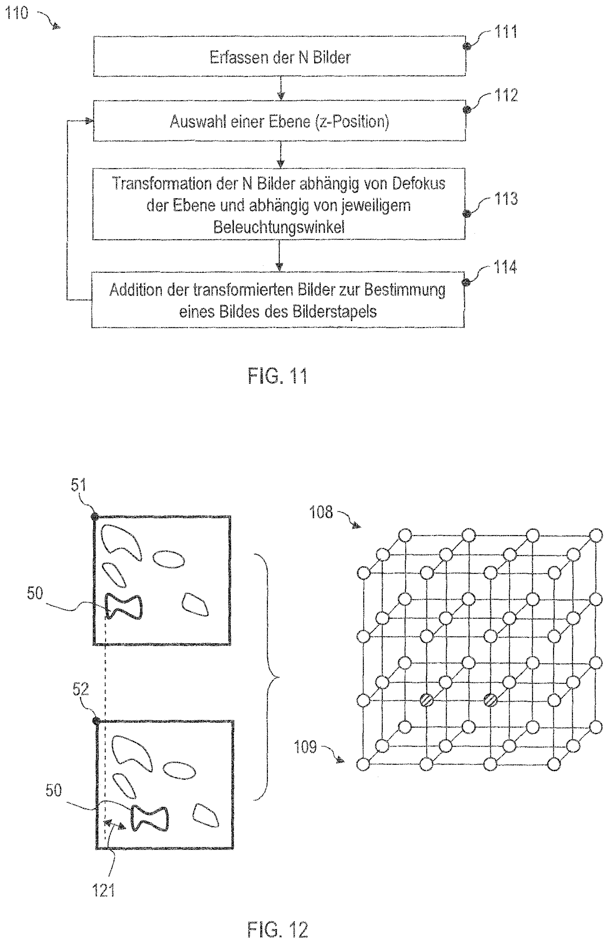

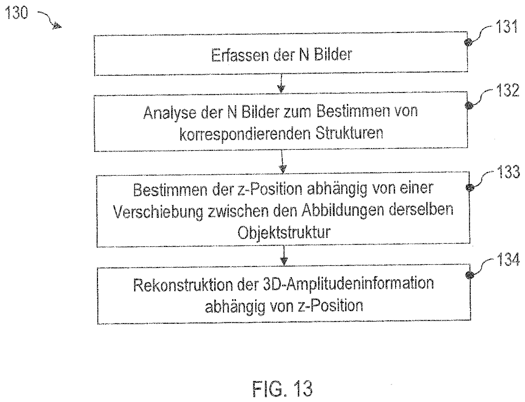

Diese Verzeichnung, die von der Beleuchtungsrichtung und vom Abstand der Struktur im Objekt von der Fokusebene des Detektors abhängt, kann zur Rekonstruktion der dreidimensionalen Information verwendet werden. Dazu kann beispielsweise ein Bilderstapel (z.B. ein so genannter "z-Stack") ermittelt werden, wie unter Bezugnahme auf FIG. 10 bis FIG. 13 beschrieben wird. Es kann insbesondere eine Strukturerkennung in mehreren Bildern verwendet werden, um eine z-Position einer in mehrere Bilder abgebildeten Objektstruktur abhängig von einer beleuchtungswinkelabhängigen Verschiebung zu ermitteln, wie unter Bezugnahme auf FIG. 12 und FIG. 13 beschrieben wird.

Zur Berechnung eines Bilderstapels kann auf jedes Bild der Mehrzahl von Bildern eine Transformation angewandt werden, die sowohl von dem Beleuchtungswinkel für das jeweilige Bild als auch von einer Position der Ebene, die rekonstruiert werden soll, entlang der z-Achse abhängt. Die Transformation kann so gewählt sein, dass die Verzeichnung, die für diesen Abstand der Ebene von der Fokusebene des Detektors und für diesen Beleuchtungswinkel resultiert, wieder invertiert wird.

Die durch die Transformation modifizierten Bilder können kombiniert werden, beispielsweise durch Summation oder eine andere Linearkombination, um die Amplitudeninformation für eine Ebene des Objekts zu rekonstruieren. Durch die Invertierung der Verzeichnung mit der Transformation, die abhängig von der Position der Schicht definiert ist, kann bei der Summation oder einer anderen Linearkombination der durch die Transformation modifizierten Bilder eine konstruktive Aufsummation spezifisch für diejenigen Strukturen erreicht werden, die in der gewünschten Schicht des Objekts positioniert sind.

Diese Vorgehensweise kann für unterschiedliche Schichten wiederholt werden. Auf diese Weise kann ein Bilderstapel erzeugt werden, wobei jedes Bild des Bilderstapels beispielsweise einer Schicht eines Voxelgitters entsprechen kann. Jedes Bild des Bilderstapels kann einem Schnitt durch das Objekt in einer Ebene senkrecht zur z-Achse entsprechen.

FIG. 10 veranschaulicht eine derartige Verarbeitung bei Verfahren und Vorrichtungen nach Ausführungsbeispielen. Mehrere Bilder 51-53 werden für unterschiedliche Beleuchtungswinkel erfasst. Eine Struktur des Objekts, die um einen z-Defokus gegenüber der Fokusebene 100 verschoben ist, wird in den unterschiedlichen Bildern 51-53 an beleuchtungswinkelabhängigen Positionen als Struktur 50 abgebildet. Die Position des Abbilds der Struktur 50 variiert mit dem Beleuchtungswinkel, wobei die beleuchtungswinkelabhängige Veränderung der Position von dem Beleuchtungswinkel und dem z-Defokus abhängt.

Es werden Transformationen $S_1$-$S_3$ auf die Bilder 51-53 angewandt. Die Transformationen $S_1$-$S_3$ invertieren die Verzeichnung, die für den spezifischen z-Defokus der gerade zu rekonstruierenden Ebene beleuchtungswinkelabhängig entstehen.

Die Transformation $S_1$-$S_3$ kann bei einer einfachen Implementierung beispielsweise eine Verschiebung der Bilder 51-53 oder von Bildbereichen der Bilder 51-53 um

$$\Delta x = sf \cdot \tan(\theta_x) \cdot \Delta z \qquad (4)$$

in der x-Richtung und um

$$\Delta y = sf \cdot \tan(\theta_y) \cdot \Delta z \qquad\qquad (5)$$

in der y-Richtung korrigiert werden. Der Wert $\Delta z$ bezeichnet den z-Defokus, d.h. den Abstand zwischen der zu rekonstruierenden Ebene des Objekts und der Fokusebene des Detektors. Der Faktor sf ist ein Skalierungsfaktor. Mit dem Skalierungsfaktor kann eine Umrechnung zwischen Abständen in der Zwischenbildebene, die von dem Detektor in die Ebene des Bildsensors abgebildet wird, in Abstände in der Ebene des Bildsensors erfolgen. Der Skalierungsfaktor kann ein negatives Vorzeichen aufweisen.

Anders als die Transformationen $T_1$-$T_3$, die in FIG. 5 dargestellt sind, sind die Transformationen $S_1$-$S_3$ nicht nur vom Beleuchtungswinkel, sondern auch von dem z- Defokus der gerade rekonstruierten Ebene abhängig.

Komplexere Formen der Transformation können gewählt werden, beispielsweise um feldpunktabhängige Verzeichnungen zu korrigieren, die durch Aberration erzeugt werden können.

Durch Anwendung der Transformationen $S_1$-$S_3$ werden die für eine spezifische Ebene, die gerade rekonstruiert werden soll und die einen z- Defokus aufweist, resultierenden Verzeichnungen in der Ebene des Bildsensors invertiert. Die durch Anwendung der Transformationen $S_1$-$S_3$ erzeugten modifizierten Bilder 104-106 sind derart, dass die in der gerade rekonstruierten Ebene positionierte Struktur 50 in allen modifizierten Bildern 104-106 an näherungsweise der gleichen Stelle abgebildet ist. Andere Strukturen, die in anderen Objektebenen des Objekts angeordnet sind, bleiben in den modifizierten Bildern 104-106 gegeneinander verschoben.

Durch Aufsummation oder andere Verarbeitung der modifizierten Bilder 104-106, beispielsweise durch Berechnung einer Linearkombination mit abhängig vom Beleuchtungswinkel variierenden Koeffizienten, wird ein Bild 107 eines Bilderstapels erzeugt. In dem Bild 107 des Bilderstapels ist die Bildinformation der Struktur 50 aus den Bildern 51-53 konstruktiv überlagert, so dass die Struktur, die in der entsprechenden Ebene des Objekts angeordnet ist, in dem Bild 107 des Bilderstapels vor einem inkohärenten Hintergrund rekonstruiert werden kann.

Das Bild 107 des Bilderstapels stellt beispielsweise die Information dar, die in einer Schicht 109 eines Voxelgitter 108 enthalten ist.

Die Verarbeitung kann für unterschiedliche Schichten wiederholt werden, um mehrere Bilder eines Bilderstapels zu erzeugen und so das gesamte Voxelgitter 108 mit Information über das Objekt zu füllen.

FIG. 11 ist ein Flussdiagramm eines Verfahrens 110, das von einer Vorrichtung nach einem Ausführungsbeispiel ausgeführt werden kann.

Bei Schritt 111 wird eine Mehrzahl von Bildern des Objekts erfasst. Die Bilder können sequentiell für unterschiedliche Beleuchtungswinkel aufgenommen werden. Für jeden Beleuchtungswinkel einer Mehrzahl von Beleuchtungswinkeln kann jeweils wenigstens ein Intensitätsbild erfasst werden. Für mehrere der Beleuchtungswinkel wird das Objekt schräg beleuchtet, und Strahl der Beleuchtung und optische Achse des Detektors sind nicht parallel zueinander.

Bei Schritt 112 wird eine Ebene ausgewählt, die rekonstruiert werden soll. Beispielsweise können sequentiell mehrere Ebenen ausgewählt werden, die entlang der optischen Achse gleichmäßig voneinander beabstandet angeordnet sind. Die ausgewählte Ebene weist einen Abstand $\Delta z$ von der Fokusebene auf, der von Null verschieden sein kann.

Bei Schritt 113 wird auf jedes Bild eine Transformation angewandt, die von der Position der zu rekonstruierenden Ebene und insbesondere von deren Abstand von der Fokusebene des Detektors abhängt. Die Transformation hängt weiterhin vom Beleuchtungswinkel ab. Die Transformation ist derart definiert, dass dadurch die Verzeichnung, die für Objektstrukturen in der bei Schritt 111 ausgewählten Ebene bei Abbildung auf den Bildsensor 15 resultieren, invertiert werden.

Bei Schritt 114 werden die durch die Transformation modifizierten Bilder kombiniert. Die modifizierten Bilder können beispielsweise pixelweise summiert oder auf andere Weise linear kombiniert werden. Andere Techniken zur Kombination können verwendet werden. Beispielsweise kann eine Filterung derart erfolgen, dass der inkohärente Hintergrund, der durch die nicht in der ausgewählten Ebene positionierte Objektstrukturen verursacht wird, unterdrückt wird.

Die Schritte 112, 113 und 114 können für mehrere Schichten des Objekts wiederholt werden, um mehrere Bilder eines Bilderstapels zu erzeugen.

Bei Ausführungsbeispielen kann die vom z-Defokus und dem Beleuchtungswinkel abhängige Verschiebung verwendet werden, um durch Strukturerkennung und Analyse der Verschiebung derselben Struktur zwischen unterschiedlichen Bildern eine z-Position zu ermitteln. Die so ermittelte Position gibt an, in welcher Position entlang der optischen Achse die Objektstruktur, die in einander entsprechende Strukturen in mehreren Bildern abgebildet wird, angeordnet ist. Eine Implementierung derartiger Techniken wird unter Bezugnahme auf FIG. 12 und FIG. 13 näher beschrieben.

FIG. 12 ist eine Darstellung zur Erläuterung einer Rekonstruktion, die eine Strukturerkennung verwendet.

Abbildungen derselben Objektstruktur 50 können in unterschiedlichen Bildern 51, 52 der Mehrzahl von Bildern beleuchtungswinkelabhängig gegeneinander verschoben sein. Die entsprechende Verzeichnung hängt vom Defokus und von dem Beleuchtungswinkel ab. Die Abbildung der Objektstruktur 50 in dem Bild 52 kann um einen zweidimensionalen Vektor 121 gegenüber der Abbildung derselben Objektstruktur 50 in einem anderen Bild 51 verschoben sein. Der Vektor 121 hängt von den Beleuchtungswinkeln bei Aufnahme der Bilder 51, 52 und von dem z-Defokus ab, der die Position der Objektstruktur entlang der z-Achse im Objekt definiert.

Durch eine Strukturerkennung, die Abbildungen der Objektstruktur 50 in unterschiedlichen Bildern 51, 52 erkennt, und Verzeichnungsanalyse, mit der die relative Verschiebung der Abbildungen derselben Objektstruktur 50 in unterschiedlichen Bildern bestimmt wird, kann ermittelt werden, in welcher Ebene senkrecht zur z-Achse die Objektstruktur angeordnet ist.

Die Rekonstruktion der dreidimensionalen Information kann so erfolgen, dass die entsprechende Abbildung 50, korrigiert um die vom Beleuchtungswinkel und dem z-Defokus abhängige Verzeichnung, Volumenelementen in einer Schicht 109 des Voxelgitters 108 zugeordnet werden. Die Schicht 109 hängt dabei von der ermittelten Verschiebung 121 ab. Beispielsweise kann der z-Defokus aus der Verschiebung

$$\Delta x_{rel} = sf \cdot [\tan(\theta_{x,1}) - \tan(\theta_{x,2})] \cdot \Delta z \qquad (6)$$

in der x-Richtung und

$$\Delta y_{rel} = sf \cdot [\tan(\theta_{y,1}) - \tan(\theta_{y,2})] \cdot \Delta z \qquad (7)$$

in der y-Richtung bestimmt werden, wobei $\Delta x_{rel}$ und $\Delta y_{rel}$ die relative Verschiebung der Abbildung der Objektstruktur zwischen den Bildern bezeichnet, $\theta_{x,1}$ und $\theta_{y,1}$ Winkelkoordinaten sind, die den Beleuchtungswinkel bei Aufnahme eines ersten Bildes definieren, und $\theta_{x,2}$ und $\theta_{y,2}$ Winkelkoordinaten sind, die den Beleuchtungswinkel bei Aufnahme eines zweiten Bildes definieren. Gleichungen (6) und (7) können nach dem z-Defokus $\Delta z$ aufgelöst werden, um zu bestimmen, in welcher Ebene des Voxelgitters die Objektstruktur, die in zwei Bildern um $x_{rel}$ und $\Delta y_{rel}$ verschoben ist, angeordnet ist.

FIG. 13 ist ein Flussdiagramm eines Verfahrens 130, das von einer Vorrichtung nach einem Ausführungsbeispiel ausgeführt werden kann.

Bei Schritt 131 wird eine Mehrzahl von Bildern des Objekts erfasst. Die Bilder können sequentiell für unterschiedliche Beleuchtungswinkel aufgenommen werden. Für jeden Beleuchtungswinkel einer Mehrzahl von Beleuchtungswinkeln kann jeweils wenigstens ein Intensitätsbild erfasst werden. Für mehrere der Beleuchtungswinkel wird das Objekt schräg beleuchtet, und Strahl der Beleuchtung und optische Achse des Detektors sind nicht parallel zueinander.

Bei Schritt 132 wird eine Strukturerkennung ausgeführt. Dabei werden mehrere Bilder analysiert, um in wenigstens zwei der Bilder Abbildungen von Objektstrukturen zu erkennen, die einander entsprechen. Unterschiedliche Techniken können zur Bestimmung einander entsprechender Strukturen verwendet werden, beispielsweise entropiebasierte Ähnlichkeitsmaße oder andere Ähnlichkeitsmetriken.

Bei Schritt 133 wird eine Verschiebungsanalyse durchgeführt. Dabei kann ermittelt werden, um welchen Vektor in der Bildebene die Abbildungen einer Objektstruktur in wenigstens zwei Bildern zueinander verschoben sind. Abhängig von der relativen Verschiebung der Abbildung der Objektstruktur kann ermittelt werden, in welchem Abstand von einer Fokusebene die Objektstruktur im Objekt angeordnet ist. Auf diese Weise kann die Schicht des Voxelgitters ermittelt werden, der die entsprechende Amplitudeninformation zugeordnet werden muss.

Bei Schritt 134 wird die dreidimensionale Amplitudeninformation abhängig von der Abbildung der Objektstruktur in einem oder mehreren der Bilder und abhängig von der bei Schritt 133 ermittelten z-Koordinate ermittelt. Dabei können die Amplitudenwerte an Volumenelementen, deren z-Koordinate dem bei Schritt 133 ermittelten z-Defokus entspricht, und deren x- und y-Koordinaten basierend auf den Koordinaten der Abbildung der Struktur in wenigstens einem der Bilder ermittelt wird, gemäß den Pixelwerten von wenigstens einem der Bilder gesetzt werden. Beispielsweise kann die erkannte Struktur 50 in nur eine Ebene des Voxelgitters 108 projiziert werden, die von der Verschiebung 121 zwischen der Abbildung der Objektstruktur zwischen den Bildern abhängt.

Schritt 134 kann auch eine vom z-Defokus und dem Beleuchtungswinkel abhängige Verzeichnungskorrektur umfassen, mit der die Verschiebung oder Verzerrung der Objektstruktur in den Bildern 51, 52 wenigstens teilweise kompensiert wird. Auf diese Weise kann auch eine in x- und y-Richtung korrekte Positionsermittlung der Objektstruktur in dem Voxelgitter 108 sichergestellt werden.

Die verschiedenen Methoden zur Rekonstruktion dreidimensionaler Amplitudeninformation können miteinander kombiniert werden. Beispielsweise kann eine Bestimmung von z-Positionen durch Verschiebungsanalyse, wie sie unter Bezugnahme auf FIG. 12 und FIG. 13 beschrieben wurde, und/oder eine tomographische Rekonstruktion, wie sie unter Bezugnahme auf FIG. 3 bis FIG. 6 beschrieben wurde, verwendet werden, um eine Schätzung für die dreidimensionale Amplituden- und/oder Phaseninformation des Objekts zu ermitteln. Diese kann mit einem iterativen Verfahren, wie es beispielsweise unter Bezugnahme auf FIG. 7 und FIG. 8 beschrieben wurde, weiter verfeinert werden.

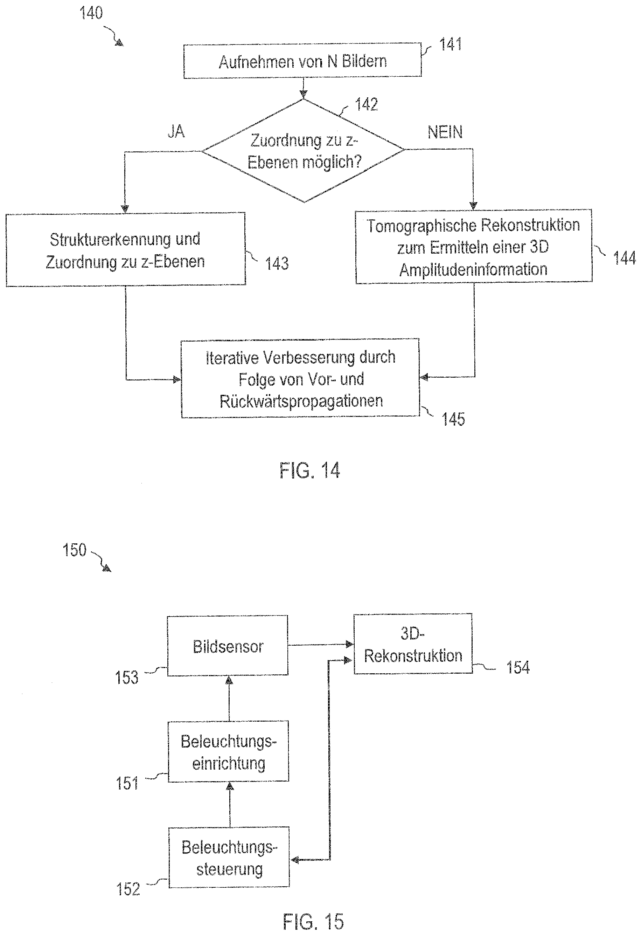

FIG. 14 ist ein Flussdiagramm eines Verfahrens 140, das von einer Vorrichtung nach einem Ausführungsbeispiel ausgeführt werden kann.

Bei Schritt 141 wird eine Mehrzahl von Bildern erfasst. Bei Schritt 142 wird überprüft, ob durch Strukturerkennung und Verschiebungsanalyse eine Zuordnung von Objektstrukturen, die in mehrere Bilder abgebildet sind, zu unterschiedlichen Positionen entlang der optischen Achse möglich ist. Dazu kann beispielsweise eine Objektdichte ausgewertet werden.

Falls eine Ermittlung von z-Positionen durch Strukturerkennung und Verschiebungsanalyse möglich ist, können bei Schritt 143 zueinander korrespondierende Strukturen in jeweils wenigstens zwei Bildern erkannt werden. Die korrespondieren Strukturen sind Abbildungen derselben Objektstruktur in unterschiedlichen Bildern. Dazu können beispielsweise herkömmlichen Algorithmen zum Formvergleich und/oder zur beleuchtungswinkelabhängigen Verfolgung eines Objekts über mehrere Bilder eingesetzt werden. Aus der Verschiebung der Abbildungen derselben Objektstruktur in unterschiedlichen Bildern kann die z-Position ermittelt werden. Schritt 143 kann beispielsweise wie unter Bezugnahme auf FIG. 12 und FIG. 13 beschrieben implementiert werden.

Falls die Ermittlung von z-Positionen durch Strukturerkennung und Verschiebungsanalyse nicht möglich ist, beispielsweise weil die Dichte von Strukturen in den Bildern zu hoch ist, kann bei Schritt 144 optional eine tomographische Rekonstruktion erfolgen. Die tomographische Rekonstruktion kann eine Transformation der Bilder umfassen, mit der eine Verkippung zwischen Detektor und Strahlrichtung kompensiert wird. Die tomographische Rekonstruktion kann wie unter Bezugnahme auf FIG. 3 bis FIG. 6 beschrieben ausgeführt werden.

Optional kann die in Schritt 143 oder Schritt 144 ermittelte dreidimensionale Information als initiale Schätzung für ein iteratives Verfahren verwendet werden. Dazu kann bei Schritt 145 durch eine Folge von Vorwärts-Propagationen und Rückpropagationen, wie sie beispielsweise unter Bezugnahme auf FIG. 7 und FIG. 8 beschrieben wurde, die dreidimensionale Information mit höherer Genauigkeit rekonstruiert werden.

FIG. 15 ist eine Blockdiagrammdarstellung 150 einer Vorrichtung nach einem Ausführungsbeispiel.

Die Bildaufnahmevorrichtung umfasst eine Beleuchtungseinrichtung 151, die steuerbar ist. Mit der Beleuchtungseinrichtung 151 kann das Objekt sequentiell unter mehreren verschiedenen Beleuchtungswinkeln beleuchtet werden. Eine Beleuchtungssteuerung 152 kann die sequentiell eingestellten Beleuchtungswinkel steuern. Die Beleuchtungseinrichtung 151 kann eine LED-Anordnung umfassen. Die Beleuchtungseinrichtung 151 kann ein steuerbares optisches Element in einer Zwischenbildebene umfassen, das beispielsweise eine bewegliche Lochblende, eine Mikrospiegelanordnung, eine Flüssigkeitskristallmatrix oder einen räumlichen Lichtmodulator umfassen kann.

Ein Bildsensor 153 erfasst für jeden der Beleuchtungswinkel, unter denen das Objekt beleuchtet wird, wenigstens ein Bild. Das Bild kann Information in mehreren Farbkanälen umfassen. Der Bildsensor 153 kann wenigstens einen CCD- oder CMOS-Chip umfassen.

Ein Modul zur 3D-Rekonstrukation 154 kann Information über das Objekt aus der Mehrzahl von Bildern ermitteln. Die Rekonstruktion kann abhängig davon erfolgen, in welche Pixel Volumenelemente des Objekts für mehrere Beleuchtungswinkel jeweils abgebildet werden. Die Rekonstruktion kann auf unterschiedliche Weise erfolgen, wie unter Bezugnahme auf FIG. 1 bis FIG. 14 beschrieben wurde. Beispielsweise kann eine Verkippung der optischen Achse des Detektors relativ zum Beleuchtungsstrahl kompensiert werden, bevor eine Rückprojektion erfolgt. Alternativ oder zusätzlich können iterative Methoden eingesetzt werden, bei denen eine Schätzung für das Objekt in die Bildebene rechnerisch vorwärtspropagiert wird und eine Korrekturfunktion aus der Bildebene rechnerisch rückwärtspropagiert wird. Alternativ oder zusätzlich können Bilder eines Bildstapels rekonstruiert werden. Alternativ oder zusätzlich kann eine Strukturerkennung in Kombination mit einer Verschiebungsanalyse verwendet werden, um einer in mehreren Bildern enthaltenen Objektstruktur einer z-Position zuzuordnen.

Ein Speichermedium mit Information zur 3D-Rekonstruktion kann in verschiedenen Formen Information speichern, die von dem Modul zur 3D-Rekonstruktion 154 verwendet wird. Die Information zur 3D-Rekonstruktion kann eine lineare Abbildung definieren, beispielsweise in Form einer Transformationsmatrix. Die Transformationsmatrix kann für mehrere Beleuchtungswinkel Abbildungen eines Bildes in ein transformiertes Bild definieren, beispielsweise um die Verkippung des Detektors relativ zum Beleuchtungsstrahl zu kompensieren. Die Transformationsmatrix kann für mehrere Beleuchtungswinkel Abbildungen zwischen Volumenelementen eines Voxelgitters, in dem das Objekt rekonstruiert wird, und den Pixeln des Bildsensors definieren.

Während Ausführungsbeispiele unter Bezugnahme auf die Figuren beschrieben wurden, können Abwandlungen bei weiteren Ausführungsbeispielen realisiert werden.

Bei den Vorrichtungen und Verfahren nach Ausführungsbeispielen kann die Vorrichtung jeweils so ausgestaltet sein, dass eine Schärfentiefe des Detektors größer ist als eine Abmessung des Objekts, dessen Information dreidimensional rekonstruiert werden soll, entlang der optischen Achse.

Während die Vorrichtungen und Verfahren nach Ausführungsbeispielen eingerichtet sein können, um eine von der optischen Dichte oder Extinktion des Objekts abhängige Amplitudeninformation dreidimensional zu rekonstruieren, kann auch eine Phaseninformation ortsaufgelöst ermittelt werden. Dazu können beispielsweise die beschriebenen Techniken auf komplexe Felder ausgedehnt werden. Aufgrund der steuerbaren Beleuchtung kann eine Phaseninformation auch durch Differenzbildung zwischen Bildern, die unterschiedlichen Beleuchtungswinkeln zugeordnet ist, ermittelt werden.

Während die Vorrichtung nach Ausführungsbeispielen insbesondere ein Mikroskopsystem sein kann, können die beschriebenen Techniken auch bei anderen Abbildungssystemen verwendet werden.

**Patentansprüche**

1.  Vorrichtung zur dreidimensionalen Abbildung eines Objekts (2), umfassend:

    eine Beleuchtungseinrichtung, die steuerbar ist, um eine Mehrzahl von Beleuchtungswinkeln (4) für eine Beleuchtung des Objekts (2) einzustellen, wobei der Beleuchtungswinkel ein Winkel zu einer optischen Achse (5) der Vorrichtung ist;
    einen Detektor (14) mit einem Bildsensor, der eingerichtet ist, um eine Mehrzahl von Bildern (51-53) des Objekts (2) für die Mehrzahl von Beleuchtungswinkeln (4) zu erfassen;
    eine elektronische Verarbeitungseinrichtung (20; 144), die mit dem Bildsensor (15; 143) gekoppelt ist und die für eine Verarbeitung der Mehrzahl von Bildern (51-53) eingerichtet ist, wobei die elektronische Verarbeitungseinrichtung (20; 144) eingerichtet ist, um abhängig von der Mehrzahl von Bildern (51-53) eine dreidimensionale Amplitudeninformation (57; 107, 108), die eine Extinktion oder optische Dichte des Objekts (2) als Funktion des Orts in drei Dimensionen repräsentiert, des Objekts (2) zu rekonstruieren,
    wobei die elektronische Verarbeitungseinrichtung (20; 144) eingerichtet ist, um für jeden Beleuchtungswinkel (4) der Mehrzahl von Beleuchtungswinkeln (4) eine dem Beleuchtungswinkel (4) zugeordnete Transformation (T1-T3) auf ein Bild (51-53) anzuwenden, das für den entsprechenden Beleuchtungswinkel (4) erfasst wurde, wobei die Transformation (T1-T3) eine Verkippung des Detektors (14) relativ zu einem Beleuchtungsstrahl (3) kompensiert.

2.  Vorrichtung nach Anspruch 1,
    wobei die elektronische Verarbeitungseinrichtung (20; 144) eingerichtet ist, um wenigstens auf einen Teil der Mehrzahl von Bildern (51-53) die dem jeweiligen Beleuchtungswinkel (4) zugeordnete Transformation (T1-T3) anzuwenden, um eine Mehrzahl modifizierter Bilder (54-56) zu erzeugen, und um aus der Mehrzahl von modifizierten Bildern (54-56) die dreidimensionale Amplitudeninformation (57) zu rekonstruieren.

3.  Vorrichtung nach einem der vorhergehenden Ansprüche,
    wobei die elektronische Verarbeitungseinrichtung (20; 144) eingerichtet ist, um die dreidimensionale Amplitudeninformation (57; 107, 108) abhängig davon zu rekonstruieren, in welche Pixel des Bildsensors (15; 143) ein Volumenelement (41, 42) des Objekts (2) für die Mehrzahl von Beleuchtungswinkel (4) jeweils abgebildet wird.

4.  Vorrichtung nach Anspruch 3,
    wobei die elektronische Verarbeitungseinrichtung (20; 144) eingerichtet ist, um abhängig von einem Abstand des Volumenelements (41, 42) von einer Fokusebene (100) des Detektors (14) zu ermitteln, in welche Pixel des Bildsensors (15; 143) das Volumenelement (41, 42) des Objekts (2) für die Mehrzahl von Beleuchtungswinkel (4) jeweils abgebildet wird.

5.  Vorrichtung nach Anspruch 3 oder Anspruch 4,
    wobei die elektronische Verarbeitungseinrichtung (20; 144) eingerichtet ist, um die Amplitudeninformation (57; 107, 108) mehrerer Volumenelemente des Objekts (2), die in mehreren unterschiedlichen Ebenen angeordnet sind, abhängig von Intensitäten zu rekonstruieren, die der Bildsensor (15; 143) an einem Pixel (54) für die unterschiedlichen Beleuchtungswinkel (4) erfasst.

6.  Vorrichtung nach einem der vorhergehenden Ansprüche,
    wobei die elektronische Verarbeitungseinrichtung (20; 144) eingerichtet ist,

    um aus einer Schätzung für die dreidimensionale Amplitudeninformation eine Intensitätsverteilung auf dem Bildsensor (15; 143) für einen Beleuchtungswinkel (4) der Mehrzahl von Beleuchtungswinkeln (4) rechnerisch zu ermitteln,
    um ein Korrekturbild, das von einem Vergleich der rechnerisch ermittelten Intensitätsverteilung mit dem für die Beleuchtungsrichtung erfassten Bild abhängt, zu bestimmen, und
um eine Rückprojektion oder Rückpropagation des Korrekturbilds auszuführen.

**7.** Vorrichtung nach Anspruch 6,
wobei die elektronische Verarbeitungseinrichtung (20; 144) eingerichtet ist, um die Rückprojektion oder die Rückpropagation in Volumenelemente auszuführen, die in mehreren unterschiedlichen Ebenen senkrecht zu einer optischen Achse (5) angeordnet sind.

**8.** Vorrichtung nach Anspruch 6 oder Anspruch 7,
wobei die elektronische Verarbeitungseinrichtung (20; 144) eingerichtet ist, um die Schätzung abhängig von der Rückprojektion oder der Rückpropagation zu aktualisieren, und um die Bestimmung des Korrekturbildes und die Rückprojektion oder Rückpropagation für wenigstens einen weiteren Beleuchtungswinkel (4) iterativ zu wiederholen.

**9.** Vorrichtung nach einem der vorhergehenden Ansprüche,
wobei die elektronische Verarbeitungseinrichtung (20; 144) eingerichtet ist, um zum Rekonstruieren der dreidimensionalen Amplitudeninformation (108) für wenigstens einen Teil der Mehrzahl von Bildern (51-53) jeweils eine Verzeichnung zu invertieren, die von dem Beleuchtungswinkel (4) bei Aufnahme des entsprechenden Bildes (51-53) abhängt.

**10.** Vorrichtung nach Anspruch 9,
wobei die elektronische Verarbeitungseinrichtung (20; 144) eingerichtet ist, um zum Rekonstruieren der dreidimensionalen Amplitudeninformation einen Bilderstapel des Objekts (2) aus der Mehrzahl von Bildern (51-53) zu berechnen.

**11.** Vorrichtung nach Anspruch 10,
wobei die elektronische Verarbeitungseinrichtung (20; 144) eingerichtet ist, um zum Berechnen eines Bildes (107) des Bilderstapels, das einen Schnitt durch das Objekt (2) entlang einer Schnittebene (101, 102) repräsentiert, eine Transformation ($S_1$-$S_3$) auf wenigstens einen Teil der Mehrzahl von Bildern (51-53) anzuwenden, wobei die Transformation ($S_1$-$S_3$) von dem Beleuchtungswinkel (4) bei Aufnahme des entsprechenden Bildes und von einer Position der Schnittebene (101, 102) abhängt.

**12.** Vorrichtung nach Anspruch 10 oder Anspruch 11,
wobei die elektronische Verarbeitungseinrichtung (20; 144) eingerichtet ist,

um einander entsprechende Abbildungen einer Objektstruktur (50) in wenigstens zwei Bildern zu erkennen, die für unterschiedliche Beleuchtungswinkel (4) erfasst wurden, und
um eine Position der Objektstruktur in dem Objekt (2) abhängig von einer Verschiebung (121) zwischen den einander entsprechenden Abbildungen der Objektstruktur (50) in den wenigstens zwei Bildern zu bestimmen.

**13.** Vorrichtung nach einem der vorhergehenden Ansprüche,
wobei die elektronische Verarbeitungseinrichtung (20; 144) eingerichtet ist, um abhängig von der Mehrzahl von Bildern (51-53) eine dreidimensionale Phaseninformation des Objekts (2) zu rekonstruieren.

**14.** Verfahren zur dreidimensionalen Abbildung eines Objekts (2), umfassend:

Erfassen einer Mehrzahl von Bildern (51-53), wenn ein Objekt (2) unter einer Mehrzahl von Beleuchtungswinkeln (4) beleuchtet wird, wobei der Beleuchtungswinkel ein Winkel zu einer optischen Achse (5) der Vorrichtung ist, und
Rekonstruieren einer dreidimensionalen Amplitudeninformation des Objekts (2), die eine Extinktion oder optische Dichte des Objekts (2) als Funktion des Orts in drei Dimensionen repräsentiert, aus der Mehrzahl von Bildern (51-53),
wobei zum Rekonstruieren für jeden Beleuchtungswinkel (4) der Mehrzahl von Beleuchtungswinkeln (4) eine dem Beleuchtungswinkel (4) zugeordnete Transformation (T1-T3) auf ein Bild (51-53) angewandt wird, das für den entsprechenden Beleuchtungswinkel (4) erfasst wurde, wobei die Transformation (T1-T3) eine Verkippung des Detektors (14) relativ zu einem Beleuchtungsstrahl (3) kompensiert.

**15.** Verfahren nach Anspruch 14,
das von der Vorrichtung (1) nach einem der Ansprüche 1 bis 13 ausgeführt wird.

**Claims**

1. Device for three-dimensional imaging of an object (2), comprising:

   an illumination unit, which is controllable, in order to set a plurality of illumination angles (4) for an illumination of the object (2), wherein the illumination angle is an angle with respect to an optical axis (5) of the device;
   a detector (14) having an image sensor, which is configured to detect a plurality of images (51-53) of the object (2) for the plurality of illumination angles (4) ;
   an electronic processing unit (20; 144), which is coupled to the image sensor (15; 143) and which is configured for processing the plurality of images (51-53), wherein the electronic processing unit (20; 144) is configured to reconstruct three-dimensional amplitude information (57; 107, 108), which represents an extinction or optical density of the object (2) as a function of the location in three dimensions, of the object (2) depending on the plurality of images (51-53), wherein the electronic processing unit (20; 144) is configured to apply, for each illumination angle (4) of the plurality of illumination angles (4), a transformation (T1-T3), which is assigned to the illumination angle (4), to an image (51-53) which was detected for the corresponding illumination angle (4), wherein the transformation (T1-T3) compensates for a tilting of the detector (14) relative to an illumination beam (3).

2. Device according to Claim 1,
   wherein the electronic processing unit (20; 144) is configured to apply the transformation (T1-T3) assigned to the respective illumination angle (4) at least to a portion of the plurality of images (51-53), in order to generate a plurality of modified images (54-56), and in order to reconstruct the three-dimensional amplitude information (57) from the plurality of modified images (54-56).

3. Device according to either of the preceding claims,
   wherein the electronic processing unit (20; 144) is configured to reconstruct the three-dimensional amplitude information (57; 107, 108) depending on those pixels of the image sensor (15; 143) into which a volume element (41, 42) of the object (2) is respectively imaged for the plurality of illumination angles (4).

4. Device according to Claim 3,
   wherein the electronic processing unit (20; 144) is configured to determine, depending on a distance between the volume element (41, 42) and a focal plane (100) of the detector (14), those pixels of the image sensor (15; 143) into which the volume element (41, 42) of the object (2) is respectively imaged for the plurality of illumination angles (4).

5. Device according to Claim 3 or Claim 4,
   wherein the electronic processing unit (20; 144) is configured to reconstruct the amplitude information (57; 107, 108) of a plurality of volume elements of the object (2), which are arranged in a plurality of different planes, depending on intensities detected by the image sensor (15; 143) at a pixel (54) for the different illumination angles (4).

6. Device according to any of the preceding claims,
   wherein the electronic processing unit (20; 144) is configured

   to determine computationally from an estimation for the three-dimensional amplitude information an intensity distribution on the image sensor (15; 143) for one illumination angle (4) of the plurality of illumination angles (4),
   to determine a correction image, which is dependent on a comparison of the computationally determined intensity distribution with the image detected for the illumination direction, and
   to perform a back-projection or back-propagation of the correction image.

7. Device according to Claim 6,
   wherein the electronic processing unit (20; 144) is configured to perform the back-projection or the back-propagation into volume elements which are arranged in a plurality of different planes perpendicular to an optical axis (5).

8. Device according to Claim 6 or Claim 7,
   wherein the electronic processing unit (20; 144) is configured to update the estimation depending on the back-projection or the back-propagation, and to repeat iteratively the determination of the correction image and the back-projection or back-propagation for at least one further illumination angle (4).

9. Device according to any of the preceding claims,

wherein the electronic processing unit (20; 144) is configured to invert, for the purpose of reconstructing the three-dimensional amplitude information (108), for at least a portion of the plurality of images (51-53), in each case a distortion which is dependent on the illumination angle (4) during the recording of the corresponding image (51-53).

10. Device according to Claim 9,
wherein the electronic processing unit (20; 144) is configured to calculate an image stack of the object (2) from the plurality of images (51-53) for the purpose of reconstructing the three-dimensional amplitude information.

11. Device according to Claim 10,
wherein the electronic processing unit (20; 144) is configured to apply a transformation $(S_1-S_3)$ to at least a portion of the plurality of images (51-53) for the purpose of calculating an image (107) of the image stack which represents a section through the object (2) along a sectional plane (101, 102), wherein the transformation $(S_1-S_3)$ is dependent on the illumination angle (4) during the recording of the corresponding image and on a position of the sectional plane (101, 102) .

12. Device according to Claim 10 or Claim 11,
wherein the electronic processing unit (20; 144) is configured

to identify mutually corresponding imagings of an object structure (50) in at least two images which were detected for different illumination angles (4), and
to determine a position of the object structure in the object (2) depending on a displacement (121) between the mutually corresponding imagings of the object structure (50) in the at least two images.

13. Device according to any of the preceding claims,
wherein the electronic processing unit (20; 144) is configured to reconstruct three-dimensional phase information of the object (2) depending on the plurality of images (51-53).

14. Method for three-dimensional imaging of an object (2) comprising:

detecting a plurality of images (51-53) when an object (2) is illuminated at a plurality of illumination angles (4), wherein the illumination angle is an angle with respect to an optical axis (5) of the device, and
reconstructing three-dimensional amplitude information of the object (2), which represents an extinction or optical density of the object (2) as a fuction of the location in three dimensions, from the plurality of images (51-53), wherein for the purpose of reconstructing for each illumination angle (4) of the plurality of illumination angles (4) a transformation (T1-T3) assigned to the illumination angle (4) is applied to an image (51-53) which was detected for the corresponding illumination angle (4), wherein the transformation (T1-T3) compensates for a tilting of the detector (14) relative to an illumination beam (3).

15. Method according to Claim 14,
which is performed by the device (1) according to any of Claims 1 to 13.

## Revendications

1. Arrangement de représentation tridimensionnelle d'un objet (2), comprenant :

un dispositif d'éclairage qui peut être commandé pour régler une pluralité d'angles d'éclairage (4) pour un éclairage de l'objet (2), l'angle d'éclairage étant un angle par rapport à un axe optique (5) de l'arrangement ;
un détecteur (14) comprenant un capteur d'images qui est configuré pour capturer une pluralité d'images (51-53) de l'objet (2) pour la pluralité d'angles d'éclairage (4) ;
un dispositif de traitement électronique (20 ; 144), qui est connecté au capteur d'images (15 ; 143) et qui est conçu pour le traitement de la pluralité d'images (51-53), le dispositif de traitement électronique (20 ; 144) étant conçu pour, en fonction de la pluralité d'images (51-53), reconstruire une information d'amplitude tridimensionnelle (57 ; 107, 108) de l'objet (2), qui représente une extinction ou une densité optique de l'objet (2) en fonction du lieu en trois dimensions,
le dispositif de traitement électronique (20 ; 144) étant conçu pour, pour chaque angle d'éclairage (4) de la pluralité d'angles d'éclairage (4), appliquer une transformation (T1-T3) associée à l'angle d'éclairage (4) à une image (51-53) qui a été capturée pour l'angle d'éclairage (4) correspondant, la transformation (T1-T3) compensant un défaut d'alignement angulaire du détecteur (14) par rapport à un rayon d'éclairage (3).

2. Arrangement selon la revendication 1, le dispositif de traitement électronique (20 ; 144) étant conçu pour appliquer la transformation (T1-T3) associée à l'angle d'éclairage (4) respectif sur au moins une partie de la pluralité d'images (51-53) afin de générer une pluralité d'images modifiées (54-56) en vue de reconstruire l'information d'amplitude tridimensionnelle (57) à partir de la pluralité d'images modifiées (54-56).

3. Arrangement selon l'une des revendications précédentes, le dispositif de traitement électronique (20 ; 144) étant conçu pour reconstruire l'information d'amplitude tridimensionnelle (57 ; 107, 108) en fonction du pixel du capteur d'images (15 ; 143) dans lequel un élément de volume (41, 42) de l'objet (2) est respectivement représenté pour la pluralité d'angles d'éclairage (4).

4. Arrangement selon la revendication 3, le dispositif de traitement électronique (20 ; 144) étant conçu pour déterminer, en fonction d'un écart entre l'élément de volume (41, 42) et un plan focal (100) du détecteur (14), dans quel pixel du capteur d'images (15 ; 143) l'élément de volume (41, 42) de l'objet (2) est respectivement représenté pour la pluralité d'angles d'éclairage (4).

5. Arrangement selon la revendication 3 ou 4, le dispositif de traitement électronique (20 ; 144) étant conçu pour reconstruire les informations d'amplitude (57 ; 107, 108) de plusieurs éléments de volume de l'objet (2), qui sont disposés dans plusieurs plans différents, en fonction des intensités détectées par le capteur d'images (15 ; 143) au niveau d'un pixel (54) pour les différents angles d'éclairage (4).

6. Arrangement selon l'une des revendications précédentes, le dispositif de traitement électronique (20 ; 144) étant conçu pour
à partir d'une estimation des informations d'amplitude tridimensionnelles, identifier par calcul une distribution de l'intensité sur le capteur d'images (15 ; 143) pour un angle d'éclairage (4) de la pluralité d'angles d'éclairage (4), déterminer une image de correction qui dépend d'une comparaison de la distribution de l'intensité identifiée par calcul avec l'image capturée pour la direction d'éclairage, et
exécuter une rétroprojection ou une rétropropagation de l'image de correction.

7. Arrangement selon la revendication 6, le dispositif de traitement électronique (20 ; 144) étant conçu pour exécuter la rétroprojection ou la rétropropagation dans les éléments de volume qui sont disposés dans plusieurs plans différents perpendiculairement à un axe optique (5).

8. Arrangement selon la revendication 6 ou la revendication 7, le dispositif de traitement électronique (20 ; 144) étant conçu pour actualiser l'estimation en fonction de la rétroprojection ou de la rétropropagation et pour répéter de manière itérative la détermination de l'image de correction ainsi que la rétroprojection ou la rétropropagation pour au moins un angle d'éclairage (4) supplémentaire.

9. Arrangement selon l'une des revendications précédentes, le dispositif de traitement électronique (20 ; 144) étant conçu pour, en vue de reconstruire l'information d'amplitude tridimensionnelle (108), pour au moins une partie de la pluralité d'images (51-53), respectivement inverser une distorsion d'image qui dépend de l'angle d'éclairage (4) lors de l'enregistrement de l'image (51-53) correspondante.

10. Arrangement selon la revendication 9, le dispositif de traitement électronique (20 ; 144) étant conçu pour, en vue de reconstruire l'information d'amplitude tridimensionnelle, calculer un empilement d'images de l'objet (2) à partir de la pluralité d'images (51-53).

11. Arrangement selon la revendication 10, le dispositif de traitement électronique (20 ; 144) étant conçu pour, en vue de calculer une image (107) de l'empilement d'images qui représente une coupe à travers l'objet (2) le long d'un plan de coupe (101, 102), appliquer une transformation ($S_1$-$S_3$) sur au moins une partie de la pluralité d'images (51-53), la transformation ($S_1$-$S_3$) étant dépendante de l'angle d'éclairage (4) lors de l'enregistrement de l'image correspondante et d'une position du plan de coupe (101, 102).

12. Arrangement selon la revendication 10 ou la revendication 11, le dispositif de traitement électronique (20 ; 144) étant conçu pour reconnaître des représentations mutuellement correspondantes d'une structure d'objet (50) dans au moins deux images qui ont été capturées pour des angles d'éclairage (4) différents, et
déterminer une position de la structure d'objet dans l'objet (2) en fonction d'un décalage (121) entre les représentations mutuellement correspondantes de la structure d'objet (50) dans au moins deux images.

13. Arrangement selon l'une des revendications précédentes, le dispositif de traitement électronique (20 ; 144) étant conçu pour, en fonction de la pluralité d'images (51-53), reconstruire une information de phase tridimensionnelle de l'objet (2).

14. Procédé de représentation tridimensionnelle d'un objet (2), comprenant :

   capture d'une pluralité d'images (51-53) lorsqu'un objet (2) est éclairé sous une pluralité d'angles d'éclairage (4), l'angle d'éclairage étant un angle par rapport à un axe optique (5), et
   reconstruction, à partir de la pluralité d'images (51-53), d'une information d'amplitude tridimensionnelle de l'objet (2) qui représente une extinction ou une densité optique de l'objet (2) en fonction du lieu en trois dimensions, en vue de la reconstruction, pour chaque angle d'éclairage (4) de la pluralité d'angles d'éclairage (4), une transformation (T1-T3) associée à l'angle d'éclairage (4) étant appliquée à une image (51-53) qui a été capturée pour l'angle d'éclairage (4) correspondant, la transformation (T1-T3) compensant un défaut d'alignement angulaire du détecteur (14) par rapport à un rayon d'éclairage (3).

15. Procédé selon la revendication 14, lequel est mis en œuvre par l'arrangement (1) selon l'une des revendications 1 à 13.

1

21 — Information zur 3D-Rekonstruktion

20 — Verarbeitungs-einrichtung

15 — Bildsensor

14 — Detektor

Z
X

5

13

4

3  2

12

11 — Lichtquelle

FIG. 1

30

Beleuchten des Objekts unter einem ersten
Beleuchtungswinkel und
Erfassen eines ersten Bildes
31

Beleuchten des Objekts unter einem zweiten
Beleuchtungswinkel und
Erfassen eines zweiten Bildes
32

Beleuchten des Objekts unter einem N-ten
Beleuchtungswinkel und
Erfassen eines N-ten Bildes
33

Rekonstruktion von 3D.Amplitudeninformation
34

FIG. 2

FIG. 3

FIG. 4

FIG. 5

27

60 ↘

```
┌─────────────────────────────────────────────┐ ╭61
│           Erfassen der N Bilder              │
└─────────────────────────────────────────────┘
                      │
                      ▼
┌─────────────────────────────────────────────┐ ╭62
│ Transformieren der N Bilder, um eine Verkippung │
│      des Detektors zu kompensieren           │
└─────────────────────────────────────────────┘
                      │
                      ▼
┌─────────────────────────────────────────────┐ ╭63
│      Tomographische Rekonstruktion der 3D-   │
│  Amplitudeninformation aus den N transformierten │
│                  Bildern                     │
└─────────────────────────────────────────────┘
```

FIG. 6

70 ↘

```
┌─────────────────────────────────────────────┐ ╭71
│           Erfassen der N Bilder              │
└─────────────────────────────────────────────┘
                      │
                      ▼
┌─────────────────────────────────────────────┐ ╭72
│   Vorwärtspropagation einer Schätzung der    │
│      Amplitudeninformation abhängig von      │
│             Beleuchtungsrichtung             │
└─────────────────────────────────────────────┘
                      │
                      ▼
┌─────────────────────────────────────────────┐ ╭73
│                Korekturbild                  │
└─────────────────────────────────────────────┘
                      │
                      ▼
┌─────────────────────────────────────────────┐ ╭74
│   Rückpropagation des Korrekturbildes und    │
│         Anpassung der Schätzung              │
└─────────────────────────────────────────────┘
```

FIG. 7

80

Erfassen von N Bildern — 81

Initiierung einer Schätzung — 82

n=1 — 83

Vorwärtspropagation der Schätzung abhängig von n-tem Beleuchtungswinkel — 84

Bestimmen eines Korrekturbildes abhängig von Vergleich — 85

Rückpropagation des Korrekturbildes — 86

Aktualisierung der Schätzung — 87

89 —— 3D-Information = aktuelle Schätzung

JA

Konvergenz? — 88

NEIN

NEIN

Weitere Bilder vorhanden? — 90

JA

n=n+1 — 91

FIG. 8

1

Z

X

Detektor — 14

2

16

101

100

102

3

103

105

FIG. 9

FIG. 10

EP 3 195 264 B1

FIG. 11

FIG. 12

130

131
Erfassen der N Bilder

132
Analyse der N Bilder zum Bestimmen von
korrespondierenden Strukturen

133
Bestimmen der z-Position abhängig von einer
Verschiebung zwischen den Abbildungen derselben
Objektstruktur

134
Rekonstruktion der 3D-Amplitudeninformation
abhängig von z-Position

FIG. 13

140

| Aufnehmen von N Bildern | 141

142

JA — Zuordnung zu z-Ebenen möglich? — NEIN

| Strukturerkennung und Zuordnung zu z-Ebenen | 143

| Tomographische Rekonstruktion zum Ermitteln einer 3D Amplitudeninformation | 144

| Iterative Verbesserung durch Folge von Vor- und Rückwärtspropagationen | 145

FIG. 14

150

| Bildsensor | 153

| 3D-Rekonstruktion | 154

| Beleuchtungs-einrichtung | 151

| Beleuchtungs-steuerung | 152

FIG. 15

**IN DER BESCHREIBUNG AUFGEFÜHRTE DOKUMENTE**

**In der Beschreibung aufgeführte Patentdokumente**

- US 20070258122 A